# EUROPEAN PATENT SPECIFICATION

(11) **EP 3 113 270 B1**
(45) Date of publication and mention of the grant of the patent: **20.09.2017**
(21) Application number: 16176337.0
(22) Date of filing: 27.06.2016
(51) Int. Cl.: H01M 8/0444, H01M 8/04664, H01M 8/04014, H01M 8/2475, G01N 25/28, G01N 27/416, H01M 8/0612, H01M 8/124

(54) **FUEL CELL SYSTEM WITH FLAMMABLE GAS SENSOR**
BRENNSTOFFZELLENSYSTEM MIT GASSENSOR FÜR BRENNBARES GAS
SYSTÈME DE PILE À COMBUSTIBLE AVEC SENSEUR DÉTECTANT DU GAZ COMBUSTIBLE

(30) Priority: 02.07.2015 JP 2015133464
(43) Date of publication of application: 04.01.2017
(73) Proprietor: AISIN SEIKI KABUSHIKI KAISHA, Kariya-shi, Aichi 448-8650 (JP); ROBERT BOSCH GMBH, 70442 Stuttgart (DE)
(72) Inventor: KITAMURA, Takeshi, Kariya-shi,, Aichi 448-8650 (JP); OHKAWARA, Hiroki, Kariya-shi,, Aichi 448-8650 (JP); LIMBECK, Uwe, 70442 Stuttgart (DE); FRIEDE, Wolfgang, 70442 Stuttgart (DE); KLEINEIKENSCHEIDT, Gerold, 70442 Stuttgart (DE); HERBERT, Christian, 70442 Stuttgart (DE)
(74) Representative: TBK

(56) References cited:
- EP-A1- 2 551 947
- JP-A- 2009 070 747
- US-A1- 2005 058 861
- US-A1- 2009 136 793
- US-A1- 2011 302 993
- US-A1- 2013 294 130

## Description

### [Technical Field]

This invention relates to a fuel cell system.

### [Background Art]

According to a fuel cell system, a fuel cell which generates electricity by the electro-chemical reaction of the fuel gas and oxidant gas is accommodated in a housing together with other auxiliary devices, such as for example, a valve which controls the flow-rates of the fuel gas and the oxidant gas and the conduits therefor. A combustion exhaust gas generated by the operation of the fuel cell system is discharged outside of the housing via the conduits provided in the housing. A flammable gas detecting sensor is provided within the housing for detecting a leakage of the gases in the housing caused by, for example, a loosening of the connection of the conduit or the like. (For example, See Patent Literature 1 and 2)

### [Prior Art Documents]

### [Patent Literature]

[Patent Literature 1] JP 2003-229148 A
[Patent Literature 2] US 2005/058861

### [Summary of Invention]

### [Problems to be solved by Invention]

Since the detection sensitivity of a flammable gas detecting sensor which detects a gas leakage for even the detection of the same gas concentration, is usually deteriorated due to a secular change, it is necessary to judge whether the detecting function of the detecting sensor is deteriorated or not in order to correctly detect a gas leakage. However, with a conventional structure which houses a flammable gas detecting sensor in a housing, it is practically difficult to judge whether the detection sensitivity of the flammable gas detecting sensor arranged inside of the housing is deteriorating or not. This is because a gas leakage state has to be actually provided in the housing.

The present invention was made considering the above conventional issues to be solved and the objective of the invention is to provide a fuel cell system which is provided with a flammable gas detecting sensor which detects a leakage of gas in the housing and at the same time which can judge whether the detection sensitivity of the flammable gas sensor is deteriorated or not.

### [Means to Solve the Problems]

In order to solve the above problems, the fuel cell system according to claim 1 includes a fuel cell which generates electricity by fuel supplied to an anode and an oxidant gas supplied to a cathode, a combustion portion which burns an anode off gas from the fuel cell and a cathode off gas from the fuel cell to generate a combustion exhaust gas, a casing formed by a heat-insulating material and accommodating therein the fuel cell and the combustion portion, a housing which accommodates the casing therein and provided with a ventilation discharge port discharging the air ventilated inside the housing out of the housing, a discharge passage connected to the casing and discharging the combustion exhaust gas flowing from the casing out of the housing, a flammable gas sensor provided at a sensor arranging portion positioned in the discharge passage at downstream side of a merging point of the ventilated air and the combustion exhaust gas for detecting a concentration of the flammable gas, an instructing portion which instructs the flammable gas to flow through the sensor arranging portion with an instruction concentration and a judging portion which judges whether or not a detection sensitivity of the flammable gas sensor is deteriorated based on an output value of the flammable gas sensor relative to the instruction concentration.

According to the structure above, since the flammable gas detecting sensor is provided at the sensor arranging portion which is positioned in the discharge passage for discharging the combustion exhaust gas at the downstream side relative to the merging point of the ventilated air and the combustion exhaust gas, the flammable gas detecting sensor can detect a flammable gas leaked into the housing and flowing through the sensor arranging portion which is positioned at the downstream side relative to the merging point. Since the flammable gas flows through the sensor arranging portion with an instruction concentration instructed by the instruction portion, the judging portion judges whether the detection sensitivity of the sensor is deteriorated or not based on the output value of the flammable gas detecting sensor relative to the instruction concentration. It is noted that the instruction concentration of the flammable gas at the sensor arranging portion can be appropriately selectable and is selected to a concentration value, as long as such value is sufficiently specified upon judging the deterioration of the detection sensitivity of the flammable gas detecting sensor at the output value thereof.

### [Brief Description of the Attached Drawings]

Fig. 1 is an outline view indicating an overall structure of the fuel cell system according to a first embodiment of the invention;
Fig. 2 is a graph showing the output of the flammable gas detecting sensor shown in Fig. 1;
Fig. 3 is an explanation chart explaining an outline of a method for calculating an oxygen ratio λ of the mixed gas introduced into the combustion portion;
Fig. 4 is a mapping data which indicates a relationship between the temperature of the reforming portion and the composition ratio of the reforming gas;
Fig. 5 is a flowchart of "first detection sensitivity deterioration judging process" executed by the control device shown in Fig. 1;
Fig. 6 is a flowchart of "second detection sensitivity deterioration judging process" executed by the control device shown in Fig. 1;
Fig. 7 is a flowchart of "third detection sensitivity deterioration judging process" executed by the control device shown in Fig. 1; and
Fig. 8 is a flowchart of "fourth detection sensitivity deterioration judging process" executed by the control device shown in Fig. 1;

### [Embodiments implementing the invention]

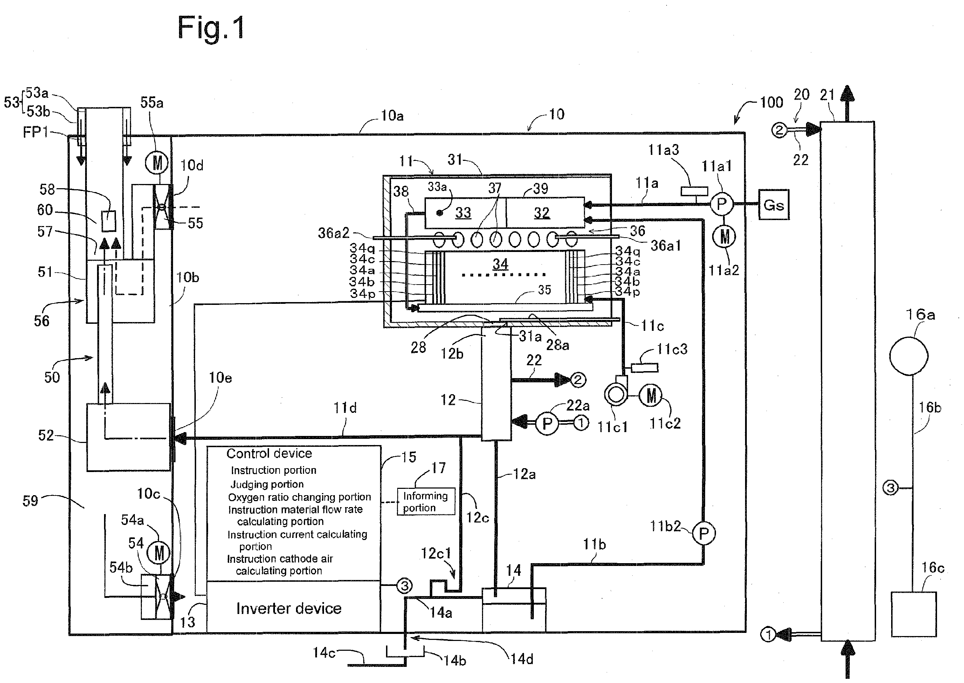

An embodiment of the fuel cell system according to the invention will be explained hereinafter. As shown in Fig. 1, the fuel cell system 100 includes an electricity generating unit 10 and a hot-water tank 21. The electricity generating unit 10 includes a housing 10a which is arranged as an indoor installation and includes a fuel cell module 11, a heat exchanger 12, an inverter device 13, a reservoir 14 (corresponding to a reforming water supplying portion), a control device 15 and an informing portion 17.

The fuel cell module 11 is structured to at least include a fuel cell 34 which will be later explained in detail. A reforming material, reforming water and a cathode air which is an air as an oxidant gas are supplied to the fuel cell module 11. As the reforming material, a reforming gaseous fuel which is a flammable gas, such as, a natural gas, an LP gas (liquefied petroleum gas) and so on and a reforming liquid fuel, such as kerosene, gasoline or methanol can be used. In detail, one end of a reforming material supply conduit 11a is connected to the fuel cell module 11 and the other end of the reforming material supply conduit 11a is connected to a supply source Gs, which is, for example, a city gas (natural gas) source. The reforming material I.e., a flammable gas is supplied to the fuel cell module 11 via the reforming material supply conduit 11a. The reforming material supply conduit 11a is provided with a material pump (which corresponds to a fuel pump 11a and a fuel supplying portion) and the material pump 11a1 is driven by an electric motor 11 a2 and the flow rate of the pump is controlled by the electric motor 11 a2 according to a drive duty. The material pump 11a1 adjusts the reforming material supply amount (flow rate per unit time) from the supply source Gs based on the control instruction value from the control device 15. Flow rate sensor 11 a3 is provided at the downstream side of the reforming material supply conduit 11a relative to the material pump 11a1 detects the flow rate of the reforming material (flammable gas) which is pumped out by the material pump 11a1. The flow rate sensor 11 a3 sends the detection result to the control device 15.

Further, the fuel cell module 11 is connected to one end of a reforming water supply conduit 11b. The other end of the reforming water supply conduit 11b is connected to a water reservoir 14 (corresponding to the reforming water supplying portion) for supplying the fuel cell module 11 with the reforming water. A reforming water pump 11 b2 is provided in the reforming water supply conduit 11b. Further, the fuel cell module 11 is connected to one end of a cathode air supply conduit 11c and the other end of the cathode air supply conduit 11c is connected to an air blower 11c1 (corresponding to the cathode air supplying portion).

The fuel cell module 11 includes a casing 31, an evaporating portion 32, a reforming portion 33 and the fuel cell 34. The casing 31 is formed to be of box-shape and is formed by a heat-insulating material. The casing 31 accommodates therein the fuel cell 34, an evaporating portion 32, the reforming portion 33 and a combustion portion 36. The evaporating portion 32 is heated by a combustion gas which will be explained later and evaporates the reforming water supplied thereto to generate a vapor. The evaporating portion 32 also pre-heats the reforming material supplied thereto. The evaporating portion 32 mixes the vapor formed from the water with the pre-heated reforming material and supplies the reforming portion 33 with the generated mixture.

One end (lower end as viewed in the drawing) of a reforming water supply conduit 11b is connected to the reservoir 14 and the other end thereof is connected to the evaporating portion 32. Further, the evaporating portion 32 is connected to the one end of the reforming material supply conduit 11a which the other end is connected to the supply source Gs.

The reforming portion 33 is heated by the combustion gas which will be explained later and a heat generated thereby necessary for vapor reforming reaction is supplied to generate a reforming gas (corresponding to the fuel) from the reforming material and the vapor supplied from the evaporating portion 32 by the vapor reforming reaction. Thus generated reforming gas is sent out from a reforming gas sending out conduit 38.

The fuel cell 34 is formed by a fuel electrode 34p (corresponding to the anode), an air electrode 34q (corresponding to the oxidant electrode, cathode) and a plurality of cells 34a formed by an electrolyte interposed between the fuel electrode 34p and the air electrode 34q. The fuel cell 34 of this embodiment is a solid oxide fuel cell. Zirconium oxide which is a kind of a solid oxide is used for the electrolyte. Hydrogen, carbon monoxide or methane gas is used at the fuel electrode 34p of the fuel cell 34 and is supplied as a fuel. The operating temperature thereof is about 400 to 1000 °C. It may be possible to generate electricity of an amount equal to or smaller than the rated value under the operating temperature equal to or less than 400 °C. At the temperature of 600 °C, starting of generation of electricity is allowed.

A fuel flow passage 34b is formed at the fuel electrode 34p side of the cell 34a for distribution of the reforming gas and an air flow passage 34c is formed at the air electrode 34q side for distribution of the air (cathode air) which is the oxidant gas.

The fuel cell 34 is provided on a manifold 35. The reforming gas from the reforming portion 33 is supplied to the manifold 35 via the reforming gas sending out conduit 38. The fuel flow passage 34b is connected to the fuel discharge port of the manifold 35 at a lower end (one end) thereof and the reforming gas discharged from the fuel discharge port is introduced from the lower end and then is discharged from the upper end. The cathode air discharged by the air blower 11c1 is supplied via the cathode air supply conduit 11c and introduced from the lower end of the air flow passage 34c and discharged from the upper end thereof.

The cathode air blower 11 c1 is driven by the electric motor 11 c2 and the flow rate thereof is controlled by the drive duty of the electric motor 11 c2. The flow rate sensor 11 c3 which is provided at the downstream side of the cathode air supply conduit 11c relative to the cathode air blower 11c1 detects the flow rate of the cathode air which is discharged by the cathode air blower 11 c1. The detected result of the flow rate sensor 11 c3 is sent to the control device 15.

A heat necessary for the vapor reforming reaction is supplied to the reforming portion 33 heated by the combustion gas combusted by the combustion portion 36, which will be explained later. The reforming gas (fuel) is formed by the material gas (reforming material, vapor) supplied from the evaporating portion 32 and is discharged. A catalyst (for example, Ruthenium or Nickel-system) is filled in the reforming portion 33 and the material gas therein is reacted through the catalyst and is reformed to be a gas containing oxygen gas and the carbon monoxide (so-called vapor reforming reaction). In other words, at the reforming portion 33, the following chemical formulae (C1 and C2) are occurring.

(C1): CH₄ + H₂O → CO + 3H₂

(C2): H₂O + CO ↔ H₂ + CO₂

Thus reformed reforming gas contains hydrogen, carbon monoxide, carbon dioxide, vapor, non-reformed natural gas (methane gas) and reforming water (vapor) which has not been used for the reforming reaction. Thus, by generating the reforming gas (fuel) from the reforming material and the reforming water at the reforming portion 33, the generated reforming gas is supplied to the fuel cell 34. It is noted that the vapor reforming reaction is an endothermic reaction.

A reforming portion temperature sensor 33a is provided at the reforming portion 33 for detecting the temperature T1 (temperature of catalyst) of the reforming portion 33. The detection result of the reforming portion temperature sensor 33a is sent to the control device 15.

At the fuel electrode 34p, the following chemical reactions shown as chemical formulae C3 and C4 are occurring.

(C3): H₂ + O²⁻ → H₂O + 2e-

(C4): CO + O²⁻ → CO₂ + 2e-

At the air electrode 34q, the following chemical reaction shown as chemical formula C5 is occurring.

(C5): 1/2 O²⁻ +2e⁻ → O²⁻

In other words, oxide ion (O²⁻) generated at the air electrode 34q transmits the electrolyte and reacts with hydrogen at the fuel electrode 34p to generate the electric energy.

The combustion portion 36 is disposed between the fuel cell 34 and the evaporating portion 32 and between the he fuel cell 34 and the reforming portion 33. The combustion portion 36 burns the anode-off gas (fuel off gas) containing flammable component exhausted from the fuel cell 34 with the cathode gas (oxidant off gas) from the fuel cell 34 and heats up the evaporating portion 32 and the reforming portion 33 by the combustion gas generated after burning.

At the combustion portion 36, the anode off gas is burned to generate flames 37. A pair of ignition heaters 36a1 and 36a2 is provided at the combustion portion 36 for igniting the anode-off gas.

The heat exchanger 12 is a heat exchanger which heat-exchanges the combustion exhaust gas and the reserved hot water, by the supply of the combustion exhaust gas discharged from the fuel cell module 11 and at the same time by the supply of the reserved hot water from the hot water tank 21. In more detail, the hot water tank 21 is used for reserving the hot water and is connected to a reserved hot water circulation line 22 through which the reserved hot water circulates (circulation in a direction indicated with an arrow in Fig. 1). A reserved hot water circulation pump 22a and the heat exchanger 12 are provided on the reserved hot water circulation line 22 in order from the lower end towards the upper end of the hot water tank 21. The heat exchanger 12 is connected to one end of a condensed water supply conduit 12a which the other end is connected to the reservoir 14.

At the heat exchanger 12, the combustion exhaust gas from the fuel cell module 11 is introduced into the heat exchanger 12 via an exhaust gas introducing portion 12b and is heat-exchanged with the reserved hot water, is condensed and is cooled down. The combustion exhaust gas after condensation passes through the exhaust conduit 11d and discharged outside of the housing 10a via a combustion exhaust gas discharge passage 50 (corresponding to the discharge passage). The condensed water is supplied to the reservoir 14 from the heat exchanger 12 through the condensed water supply conduit 12a. It is noted that the reservoir 14 purifies the condensed water through ion exchange resin.

As explained, an exhaust heat recovery system 20 is formed by the heat exchanger 12, hot water tank 21 and the reserved hot water circulation line 22. The exhaust heat recovery system 20 recovers the exhaust heat from the fuel cell module 11 to the reserved hot water and reserves.

A portion of the inlet port of the in other words, the discharge port 31a of the casing 31 is provided with a combustion catalyst 28. The combustion gas discharged from the combustion portion 36 is introduced into the combustion catalyst 28. The combustion catalyst 28 burns unburned flammable components which have not been burned at the combustion portion 36 (such as, hydrogen, methane gas, carbon monoxide or the like) which are contained in the combustion gas by the catalyst reaction. The combustion catalyst 28 contains noble metals such as platinum or paradigm carried on a single body ceramic material. The combustion catalyst 28 burns the flammable components such as hydrogen, methane gas or the carbon monoxide by a catalytic reaction instead of flame burning and the combustion speed is fast, and the combustion efficiency is high to prevent exhausting of the unburned combustion gas.

A combustion catalyst heater 28a is provided at the combustion catalyst 28 to heat up the catalyst up to the activating temperature of the catalyst to burn the flammable components. The combustion catalyst heater 28a is heated by the instructions of the control device 15 and the catalyst 28 is heated up to the activating temperature before the system is activated.

The inverter device 13 sweeps the electric current generated by the fuel cell 34. This current is referred to as a sweeping current hereinafter. The inverter device 13 inverts the sweeping current which is a swept direct current into an alternative current and the inverted alternative current is outputted to a power source line 16b which is connected to an alternative current system power source 16a and external electric power load 16c (for example, an electric appliance). The inverter device 13 can detect the current value of the sweeping current and controls the increase and decrease of the sweeping current amount. The alternative current is inputted to the inverter device 13 via the power source line 16b from the system power source 16a and the inputted alternative current is converted into a predetermined direct current by the inverter device 13 and the converted direct current is outputted to the auxiliary machines (each pump or blower) and the control device 15.

The control device 15 overall controls the fuel cell system 100. The control device 15 controls operation of the fuel cell system 100 by driving the auxiliary machines. The control device 15 feedback controls the flow rate of the reforming material supplied to the evaporating portion 32 by the material pump 11a1 based on the flow rate of the reforming material to the evaporating portion 32 detected by the reforming material flow rate sensor 11 a3. Further, the control device 15 feedback controls the flow rate of the cathode air supplied to the fuel cell 34 by the cathode air blower 11 c1 based on the flow rate of the cathode air to the fuel cell 34 by the cathode air flow rate sensor 11 c3. It is noted that the control device 15 adjusts the flow rate of the electric current of the electric motor 11a2 which drives the material pump 11a1 and flow rate of the electric current of the electric motor 11 c2 which drives the cathode air blower 11 c1 by the linear current control. It is noted that the linear current control includes PWM (Pulse Width Modulation) control which changes the electric voltage duty ratio (duty cycle) by which the material pump 11a1 is driven to gradually change the effective current.

The control device 15 adjusts the flow rate of the reforming material supplied to the evaporating portion 32 by the material pump 11a1 and at the same time adjusts the flow rate of the reforming water supplied to the evaporating portion 32 by a reforming water pump 11 b2. Further, the control device 15 adjusts the flow rate of the cathode air supplied to the fuel cell 34 by the cathode air blower 11 c1 thereby adjusting the generation of electric power generated at the fuel cell 34 and at the same time adjusting the heat quantity generated at the combustion portion 36 thereby adjusting the heat quantity supplied to the evaporating portion 32 and the reforming portion 33.

In the fuel cell system 100, an overflow line 14a is provided which connects the reservoir 14 with an indirect water discharge port space 14b provided outside of the housing 10a but indoor space. As explained, the reservoir 14 reserves condensed water generated at the heat exchanger 12. In order to discharge an overflow water to the outside of the housing 10a, the water overflowed from the reservoir 14 is discharged from the reservoir 14 through the overflow line 14a temporarily to the atmosphere of the indirect water discharge port space 14b arranged at an indoor occupied place of the building, but outside of the housing 10a. Since the indirect water discharge port space 14b is connected to an exterior conduit 14c through which the condensed water is finally discharged to the outside of the building.

An exhaust conduit 11d is connected with the heat exchanger 12 at the downstream side portion thereof. A drain conduit 12c is branched from the exhaust conduit 11d at the downstream side of the heat exchanger 12 and merges with the overflow line 14a. The condensed water by the combustion exhaust gas after condensation from the heat exchanger 12 in the exhaust conduit 11d passes through the drain conduit 12c and then through the overflow line 14a and exposed to the atmosphere at the indirect water discharge port space 14b arranged at an indoor place, but outside of the housing 10a. The condensed water is discharged from the indirect water discharge port space 14b through the exterior conduit 14c and finally discharged outdoor place from the indoor place of the building. A water discharge conduit passage 14d which discharges the condensed water generated at the heat exchanger 12 out of the housing 10a corresponds to the condensed water supply conduit 12a, the reservoir 14 and the overflow line 14a.

A water trap 12c1 is provided in the drain conduit 12c for preventing the combustion exhaust gas from flowing through the water discharge conduit passage 14d or at least through the indirect water discharge port space 14b out of an occupied space of the building. Accordingly, the combustion exhaust gas is prevented from flowing out into the occupied space of the building.

An exhaust gas duct chamber 59 is provided adjacent to the housing 10a. A ventilation exhaust gas duct 51 and a combustion exhaust gas duct 52 are provided inside of the exhaust gas duct chamber 59.

The housing 10a includes an air intake port 10c for introducing the air into the housing 10a, a ventilation discharge port 10d for discharging the air inside of the housing 10a (corresponding to the ventilation air) to the outside of the housing 10a and a combustion exhaust gas discharge port 10e for discharging the combustion exhaust gas from the heat exchanger 12 to the exterior of the housing 10a. At the air intake port 10c, a ventilation fan 54, a ventilation fan motor 54a and a check valve 54b are provided. The fan 54 is driven by the ventilation fan motor 54a to control the flow rate by drive duty. The check valve 54b allows the air flow from the exhaust gas duct chamber 59 to the inside of the housing 10a, but prohibits the air flow in the reverse direction.

A ventilation fan 55 is provided at the ventilation discharge port 10d and the fan 55 is driven by the ventilation fan motor 55a to control the flow rate by drive duty of the ventilation fan motor 55a. The fan 55 is used for sending the air inside of the housing 10a (ventilation air) out of the housing 10a. One end of the ventilation exhaust gas duct 51 is connected to the ventilation discharge port 10d. The other end of the ventilation exhaust gas duct 51 is connected to an inner conduit 53a of a chimney portion 53 which outlet port is provided outside of the building. When the ventilation fan 55 is driven, the air (ventilation air) inside of the housing 10a is discharged outside of the building via the ventilation discharge port 10d, the ventilation fan 55, the ventilation exhaust gas duct 51 and the inner conduit 53a of the chimney portion 53. (See arrow of broken line in Fig. 1). A ventilation discharge passage 56 which discharge the air (ventilation air) from the housing 10a to the outside of the housing 10a corresponds to the ventilation discharge port 10d, the ventilation exhaust gas duct 51 and the inner conduit 53a of the chimney portion 53.

The flow rate of the air (ventilation air) sent from the inside of the housing 10a through the ventilation discharge port 10d to the ventilation exhaust gas duct 51 corresponds to the drive duty of the ventilation fan motor 55a which drives the ventilation fan 55 and accordingly, can be obtained from the drive duty.

One end of the combustion exhaust gas duct 52 is connected to the combustion exhaust gas discharge port 10e and the other end thereof merges with the ventilation exhaust gas duct 51 at the merging point 57. During the electricity generation operation of the fuel cell system 100, the combustion exhaust gas discharged from the fuel cell module 11 is guided through the heat exchanger 12, the exhaust gas conduit 11d, the combustion exhaust gas discharge port 10e and the combustion exhaust gas duct 52 and discharged to the ventilation exhaust gas duct 51. (See arrow of one-dot broken line in Fig. 1). At the merging point 57, combustion exhaust gas merges with the air (ventilation air) and is discharged outside of the building through the ventilation exhaust gas duct 51 and the inner conduit 53a of the chimney portion 53. The combustion exhaust gas discharge passage 50 (corresponding to the discharge passage) which discharges the combustion exhaust gas flowing from the heat exchanger 12 to the outside of the housing 10a includes the exhaust gas conduit 11d, combustion exhaust gas discharge port 10e, the combustion exhaust gas duct 52, the ventilation exhaust gas duct 51 and the inner conduit 53a of the chimney portion 53.

The chimney portion 53 is formed of a double piping structure and is formed by an inner conduit 53a and an outer conduit 53b. An intake passage FP1 is provided between the inner and the outer conduits 53a and 53b. The intake passage FP1 establishes communication between the exterior of the building and the exhaust gas duct chamber 59. The exterior air is introduced into (intake) the exhaust gas duct chamber 59 through the intake passage FP1.

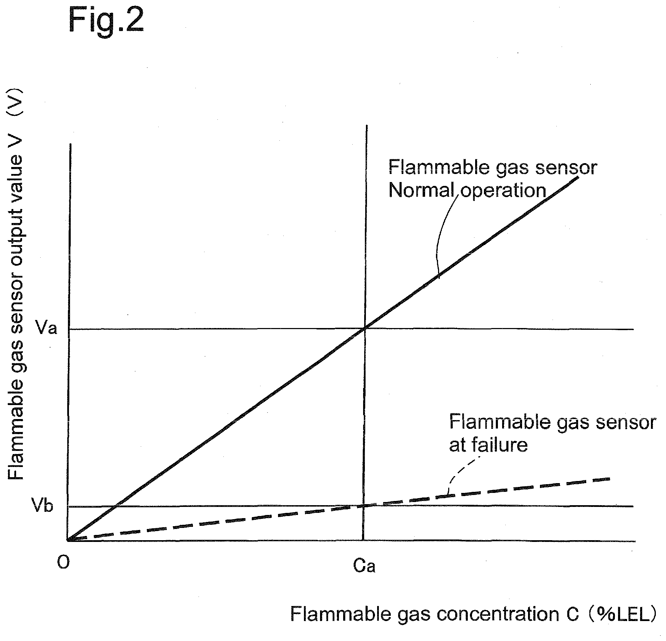

As shown in Fig. 1, a flammable gas sensor 58 which can detect the flammable gas is provided at a sensor arranging portion 60 which is positioned at a downstream side of the ventilation exhaust gas duct 51 relative to the merging point 57. A contact combustion type sensor may be used for the flammable gas sensor 58. The output performance thereof is shown in Fig. 2. A leakage of a flammable gas inside of the housing 10a can be detected at the flammable gas sensor 58 arranged at the sensor arranging portion 60. This is because the leaked flammable gas flows out of the housing 10a through the ventilation discharge passage 56 and reaches to the sensor arranging portion 60 which is positioned downstream side than the merging point 57.

The flammable gas sensor 58 exhibits an output performance indicated in Fig. 2 with solid line when the operation is under normal operation, for example, the output performance indicates the value "Va" relative to the flammable gas concentration "Ca". On the other hand, when the flammable gas sensor 58 is defective, or in operation failure, the output is indicated with broken line as shown in Fig. 2. In that situation, the output performance indicates the value "Vb (< Va)" which is lower than the value "Va" relative to the flammable gas concentration "Ca". This indicates the deterioration of the detection sensitivity of the sensor 58. If the sensor 58 which detection sensitivity has been dropped is used for detecting a gas leakage, the gas leakage may not be detected even actually a gas leakage is occurring. Accordingly, it becomes necessary to judge whether detection sensitivity of the flammable gas sensor 58 has been deteriorated or not.

Next, a judgment whether the detection sensitivity of the flammable gas sensor 58 is deteriorated or not will be explained. The control device 15 judges whether the output value V1 of the flammable gas sensor 58 relative to the concentration of the flammable gas, for example, instruction concentration C1, at the sensor arranging portion 60 positioned at a downstream side relative to the merging point 57 where the flammable gas sensor 58 is arranged is within a predetermined value or not. When the output value V1 relative to the instruction concentration C1 is not within the predetermined value, it is judged that the detection sensitivity of the flammable gas sensor 58 has been deteriorated i.e., the flammable gas sensor 58 becomes defective. The setting of the flammable gas concentration at the sensor arranging portion 60 to the instruction concentration C1 will be explained hereinafter. Under the combustion portion 36 being in a non-ignited state, the reforming material (flammable gas) supplied from the supply source Gs by the material pump 11a1 and the cathode air supplied by the cathode air blower 11c are transmitted to the sensor arranging portion 60 without being consumed at the fuel cell 34. Accordingly, in such case, the concentration of the flammable gas at the sensor arranging portion 60 can be set to the instruction concentration C1 based on the flow rate of the reforming material (flammable gas) supplied from the supply source Gs by the material pump 11a1, the flow rate of the cathode air supplied by the cathode air blower 11c and the flow rate of the ventilation air discharged from the ventilation discharge passage 56. The concentration of the flammable gas at the sensor arranging portion 60 can be set to be the instruction concentration C1, based on the control of sending the reforming material to the fuel cell 34 with the instruction concentration being predetermined in advance. It is noted that the instruction concentration C1 of the flammable gas at the sensor arranging portion 60 can be appropriately selected and may be any value as long as such value can be specified when the judgment of the deterioration of the detection sensitivity of the flammable gas sensor 58 at the output value V1 of the flammable gas sensor 58.

Further, in order to have the concentration of the flammable gas at the sensor arranging portion 60 become the instruction concentration C1, under the combustion portion 36 being in an ignited state, the reforming material (flammable gas) supplied from the supply source Gs by the material pump 11a1 and the cathode air supplied by the cathode air blower 11c are consumed at the fuel cell 34 and the flammable gas has been burned through the combustion catalyst 28. Thus, the flammable gas does not reach to the sensor arranging portion 60. Accordingly, in such case, an oxygen ratio λ which is obtained by dividing the flow rate of the oxygen included in the cathode off gas introduced into the combustion portion 36 by an ideal flow rate of the oxygen necessary for completely combusting the flammable gas contained in the anode off gas introduced into the combustion portion 36 is changed to the judging oxygen ratio λa by incomplete burning of the flammable gas. Thus by sending the flammable gas to the sensor arranging portion 60 the concentration of the flammable gas at the sensor arranging portion 60 becomes the instruction concentration C1. It is noted here that the unburned flammable components included in the anode off gas can be burned through the combustion catalyst 28 to a predetermined combustion at the combustion portion 36. However, in order to explain in a simple way, the oxygen ratio λ is calculated including the combustion at both the combustion portion 36 and the combustion through the combustion catalyst 28.

### (Calculation Method for Obtaining Oxygen Ratio λ)

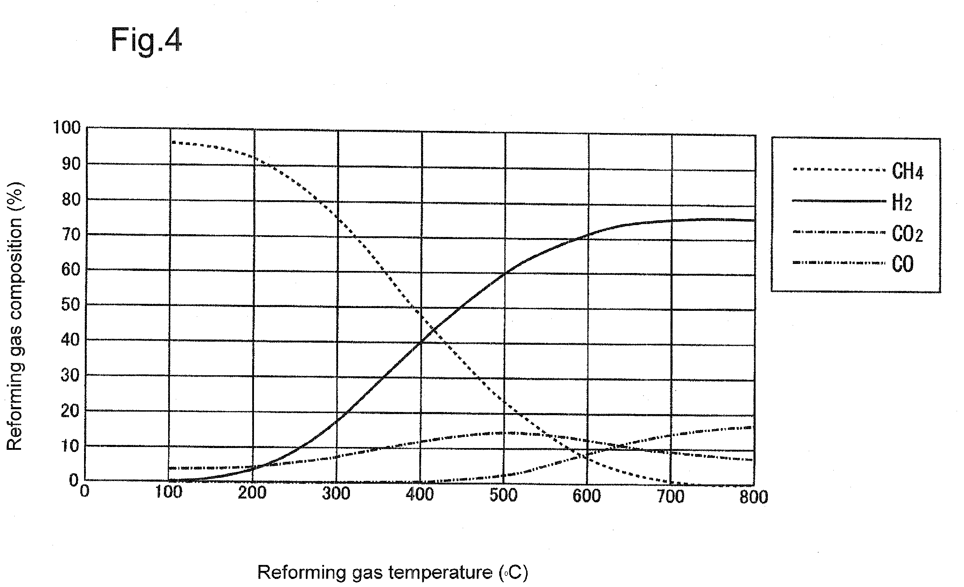

Next, a calculation method for calculating the oxygen ratio λ of the mixed gas which is a mixture of the anode off gas and the cathode off gas introduced into the combustion portion 36 will be explained in order of precedence.
(1) The flow rate of the reforming gas flowing out from the reforming portion 33 is calculated based on the flow rate of the reforming material detected by the reforming material flow rate sensor 11a3.
(2) The composition of the reforming gas referring to the mapping data shown in Fig. 4, is calculated based on the temperature of the reforming portion 33 detected by the reforming portion temperature sensor 33a. It is noted that as shown in Fig. 4, the higher the temperature of the reforming portion 33, the smaller the ratio of methane (CH₄) in the reforming gas becomes and further the higher the temperature of the reforming portion 33, the larger the ratio of hydrogen (H₂) in the reforming gas becomes and still further, the higher the temperature of the reforming portion 33, the larger the ratio of carbon monoxide (CO) in the reforming gas becomes. However, the ratio of the carbon monoxide (CO) would not exceed the ratio of the hydrogen.
(3) Flow rate of each flammable component of the reforming gas supplied from the reforming portion 33 to the fuel cell 34 is calculated based on the flow rate of the reforming gas calculated at the item (1) above and the composition of the reforming gas calculated at the item (2) above.
(4) The flow rate of the hydrogen consumed at the fuel cell 34 is calculated based on the sweeping current swept from the fuel cell 34.
(5) The flow rate of each flammable component of the anode off gas supplied from the fuel cell 34 to the combustion portion 36 is calculated based on the flow rate of the each flammable component of the reforming gas calculated at the item (3) above and the flow rate of the hydrogen consumed at the fuel cell 34 calculated at the item (4). In other words, the flow rate of the hydrogen contained in the anode off gas is calculated by subtracting the flow rate of the hydrogen consumed at the fuel cell 34 from the flow rate of the hydrogen contained in the reforming gas. Among the flammable components of the reforming gas, the flow rate of the he flammable components excluding the hydrogen is calculated as the flow rate of each flammable component excluding the hydrogen among the flammable components of the anode off gas.
(6) An ideal oxygen amount necessary for performing a complete combustion of the anode off gas supplied to the combustion portion 36 is calculated based on the flow rate of each flammable component of the anode off gas calculated at the item (5) above.
(7) The flow rate of the oxygen which is consumed at the fuel cell 34 is calculated based on the sweeping current swept from the fuel cell 34.
(8) The flow rate of the oxygen contained in the cathode off gas supplied to the combustion portion 36 from the fuel cell 34 is calculated based on the flow rate of the cathode air detected by the cathode air flow rate sensor 11 c3 and the flow rate of the oxygen consumed at the fuel cell 34 calculated at the item (7) above. In other words, the flow rate of the oxygen contained in the cathode off gas is calculated by subtracting the flow rate of the oxygen consumed at the fuel cell 34 from the flow rate of the oxygen contained in the cathode air.
(9) The oxygen ratio λ of the mixed gas introduced into the combustion portion 36 is calculated by dividing the flow rate of the oxygen contained in the cathode off gas calculated at the item (8) above by the ideal oxygen amount necessary for performing a complete combustion of the anode off gas calculated at the item (6) above.

Further, in order to have the concentration of the flammable gas at the sensor arranging portion 60 to be the instruction concentration C1, under the fuel cell 34 being in an electricity generation state, by changing the output of the fuel cell 34, the combustion state of the combustion portion 36 is brought into a combustion partially stopping state due to an incomplete combustion state or a fuel lean state caused during the transition time of change. Thus, by reaching the flammable gas to the sensor arranging portion 60, the concentration of the flammable gas at the sensor arranging portion 60 becomes the instruction concentration C1. Hereinafter, a detail method for judging whether the detection sensitivity of the flammable gas sensor 58 is deteriorated or not will be explained.

### (First Detection Sensitivity Deterioration Judging Process)

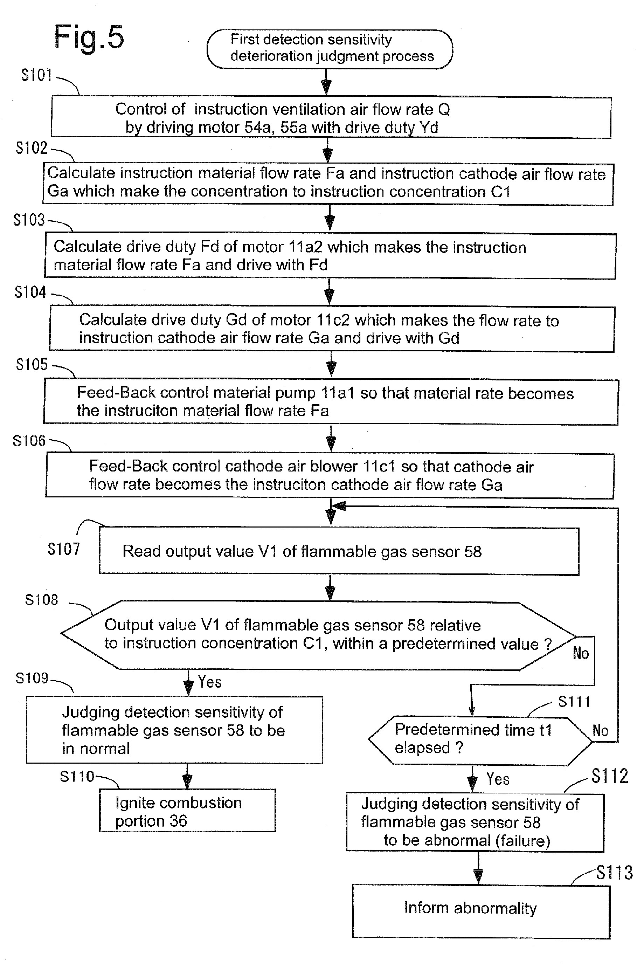

The first detection sensitivity deterioration judging process will be explained hereinafter with reference to the flowchart shown in Fig. 5. The first detection sensitivity deterioration judging process is a judging method for judging whether the detection sensitivity of the flammable gas sensor 58 is deteriorated or not based on the output value V1 of the flammable gas sensor 58 relative to the instruction concentration C1 by calculating the calculation of the instruction material flow rate Fa of the reforming material by which the flammable gas at the sensor arranging portion 60 is set to have the instruction concentration C1 and sending the reforming material towards the fuel cell 34, when the combustion portion 36 is in a non-ignited state.

The control device 15 starts execution of the corresponding program shown in Fig. 5, when the activation of the fuel cell 34 is detected and when the ignition heaters 36a1 and 36a2 are the state before igniting, i.e., when the combustion portion 36 is in non-ignited state.

At the step S101, the control device 15 (instructing portion) drives the ventilation fan motors 54a and 54b with a predetermined drive duty Yd for ventilating the inside of the housing 10a with an instruction ventilation air flow rate Q. Then the ventilation fan 54 is operated and the oxidant gas (air) is introduced into the housing 10a from the intake port 11c and purifies the air inside the housing to a fresh air. By the actuation of the ventilation fan 55, the old air (ventilation air) inside the housing 10a is discharged from the ventilation discharge port 10d to the outside of the housing 10a through the ventilation discharge passage 56. Thus, the ventilation of the inside of the housing 10a is made and thus the ventilation air flow rate Q flows through the sensor arranging portion 60.

Next, the program goes to the step S102. At the step S102, the control device 15 (instructing portion) calculates the instruction material flow rate Fa which is supplied by the material pump 11a1 that makes the concentration of the flammable gas at the sensor arranging portion 60 to be the instruction concentration C1 calculated including the ventilation air flow rate Q and the instruction cathode air flow rate Ga which is supplied by the cathode air blower 11 c1. i

Then the program goes to the step S103. At the step S103, the control device 15 (instructing portion) calculates the drive duty Fd of the electric motor 11 a2 of the material pump 11a1 which makes the flow rate to be the instruction material flow rate Fa and drives the motor 11a2 of the material pump 11a1 with a drive duty Fd.

Next, the program goes to the step S104. At the step S104, the control device 15 (instructing portion) calculates the drive duty Gd of the electric motor 11c2 of the cathode air blower 11 c1 which makes the flow rate to be the instruction cathode air flow rate Ga and drives the motor 11 c2 of the cathode air blower 11 c1 with the drive duty Gd.

Next, the program goes to the step S105. At the step S105, the control device 15 (instructing portion) feedback controls the material pump 11a1 so that the flow rate of the reforming material supplied by the material pump 11a1 becomes the instruction material flow rate Fa which is calculated at the step S102, based on the flow rate of the reforming material detected by the reforming material flow rate sensor 11a3.

Next, the program goes to the step S106. At the step S106, the control device 15 (instructing portion) feedback controls the cathode air blower 11 c1 so that the flow rate of the cathode air supplied by the cathode air blower 11 c1 becomes the instruction cathode air flow rate Ga which is calculated at the step S102 based on the flow rate of the cathode air flow detected by the flow rate sensor 11 c3. Thus, the concentration of the flammable gas at the sensor arranging portion 60 is controlled to the instruction concentration C1.

Next, the program goes to the step S107. At the step S107, the control device 15 (judging portion) reads output value V1 of the flammable gas sensor 58.

Next, the program goes to the step S108. At the step S108, the control device 15 (judging portion) judges whether the output value V1 of the flammable gas sensor 58 relative to the instruction concentration C1 of the flammable gas at the sensor arranging portion 60 is within the predetermined value or not. The meaning of the output value V1 of the flammable gas sensor 58 being "within the predetermined value" is that the output performance of the flammable gas sensor 58 during normal operation is "within a threshold value" which is set in advance, shown in Fig. 2 with a solid line.

When the output value V1 of the flammable gas sensor 58 is within the predetermined value, the control device 15 (judging portion) judges "YES" at the step S108 and the program goes to the step S109. At the step S109, the control device 15 (judging portion) judges that the detection sensitivity of the flammable gas sensor 58 is normal and advances the program to the step S110. At the step S110, the control device 15 instructs that the combustion portion 36 is allowed to be ignited and then the fuel cell 34 becomes a state ready for starting electricity generation operation.

At the step S108, when the output value V1 of the flammable gas sensor 58 is not within the predetermined value, the control device 15 (judging portion) judges "NO" and the program goes to the step S111. At the step S111, the control device 15 (judging portion) judges whether a predetermined time period t1 (for example, several to several ten seconds) elapsed or not. If the predetermined time period t1 is not elapsed, the control device 15 (judging portion) judges "NO" and the program returns to the step S107.

At the step S111, if the predetermined time period t1 has elapsed, the control device 15 (judging portion) judges "YES" and the program goes to the step S112.

At the step S112, the control device 15 (judging portion) finalizes the judgment result that the detection sensitivity of the flammable gas sensor 58 is deteriorated. Then, the program goes to the step S113. At the step S113, the control device 15 (judging portion) operates the informing portion 17 to inform the abnormality. After the process at the step S113 ends, the first detection sensitivity deterioration judging process ends. It is noted that the time period t1 at the step S111 is a time period for strictly finalize the judgments result that the detection sensitivity of the flammable gas sensor 58 has been deteriorated.

### (Advantageous Effects of the Embodiment)

The control device (judging portion) can perform the judgment whether the detection sensitivity of the flammable gas sensor 58 is deteriorated or not corresponding to the periodical activation of the fuel cell system 100 and accordingly, it is not necessary to stop igniting operation of the fuel cell system 100 separately in order to particularly judge whether the detection sensitivity of the flammable gas sensor 58 is deteriorated or not.

The explanation has been made to the case where the cathode air blower 11 c1 is provided inside of the housing 10a, but the invention is not limited to this case and it is possible to provide the cathode air blower 11 c1 outside of the housing 10a. It is noted that when the cathode air blower 11 c1 is provided outside of the housing 10a, a necessary amount of air which is a cathode air can be supplied by the cathode air blower 11 c1 even the ventilation fans 54 and 55 are under non-operation state. Therefore, according to the structure that the cathode air blower 11c1 is provided outside of the housing 10a, the concentration C1 of the flammable gas which is the reforming material at the sensor arranging portion 60 can be set based on the control of the fuel pump 11a1 and the cathode air blower 11c1, under the ventilation fans 54 and 55 being in non-operation state. Thus, it is not necessary to calculate the flow rate caused by the fans 54 and 55, which leads to performing of an easy detection of the deterioration of the sensitivity of the flammable gas sensor 58.

Further, not only sending of the ventilation air to the sensor arranging portion 60 where the flammable gas sensor 58 is positioned, but also sending of the cathode air thereto is unnecessary. The concentration of the flammable gas which is the reforming material at the sensor arranging portion 60 can be set to the instruction concentration C1 by sending the reforming material which concentration is set in advance to agree to the instruction concentration C1 to the fuel cell 34 under the non-ignited state of the combustion portion 36. Thus, this structure can perform an easy detection of the deterioration of the sensitivity of the flammable gas sensor 58. In this situation, since the instruction concentration C1 can be set based on the control of the material pump 11a1 and the flow rate sensor 11a3, since the flow rate of the reforming material can be converted into the concentration.

### (Second Detection Sensitivity Deterioration Judging Process)

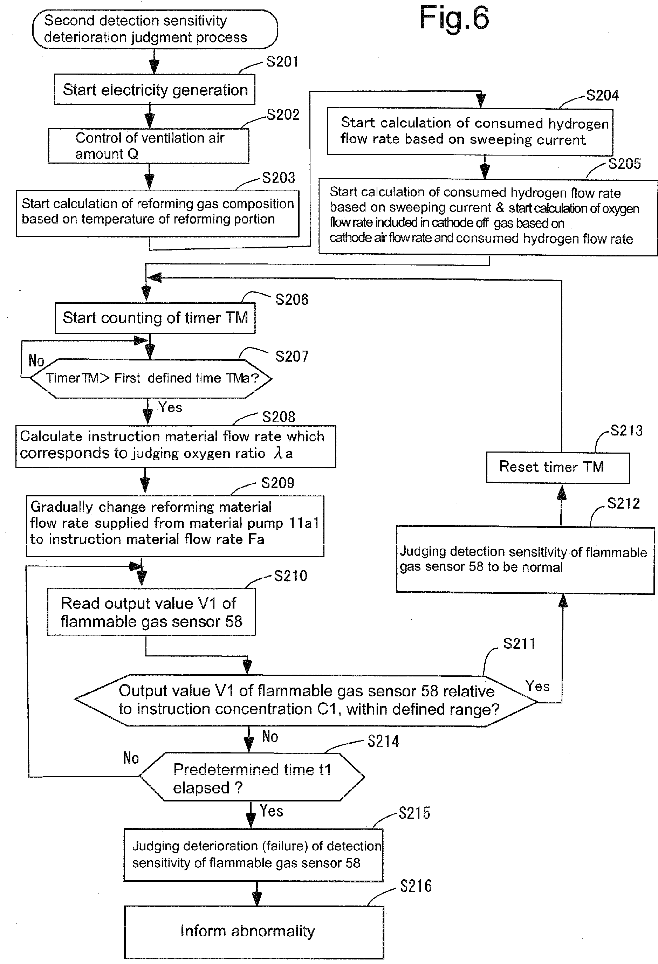

The second detection sensitivity deterioration judging process will be explained hereinafter with reference to the flowchart shown in Fig. 6. The second detection sensitivity deterioration judging process is a judging method for judging whether the detection sensitivity of the flammable gas sensor 58 is deteriorated or not based on the output value V1 of the flammable gas sensor 58 relative to the instruction concentration C1 by adjusting the oxygen ratio λ of the mixed gas supplied to the combustion portion 36 to be a judging oxygen ratio λa in order to have the concentration of the flammable gas at the sensor arranging portion 60 to be the instruction concentration C1 by increasing the flow rate of the reforming material supplied to the evaporating portion 32 , i.e., by increasing the flow rate of the reforming gas supplied to the fuel cell 34, keeping the values of the sweeping current swept from the fuel cell 34 and the flow rate of the cathode air supplied to the fuel cell 34, when the combustion portion 36 is in a so-called ignited state in which the electricity generation unit 11 is generating electricity. When the fuel cell system 100 is activated, the control device 15 advances the program to the step S201.

At the step S201, the control device 15 controls the material pump 11a1, the cathode air blower 11c1 and the reforming water pump 11b2 and ignites the ignition heaters 36a1 and 36a2. By such control and igniting operation, the fuel cell 34 starts electricity generation. After the process of the step S201 ends, the control device 15 advances the program to the step S202.

At the step S202, the control device 15 drives the ventilation fan motors 54a and 54b with a predetermined drive duty Yd for ventilating the inside air of the housing 10a with a predetermined ventilation air flow rate Q. Then, the ventilation fan 54 is operated to intake the oxidant gas (air) from the intake port 11c into the inside of the housing 10a and by the operation of the fan 55, the air (ventilation air) inside of the housing 10a is discharged to the outside of the housing 10a from the ventilation discharge port 10d through the ventilation discharge passage 56. Thus, the air inside of the housing 10a is ventilated. The ventilation air flow rate Q flows through the sensor arranging portion 60.

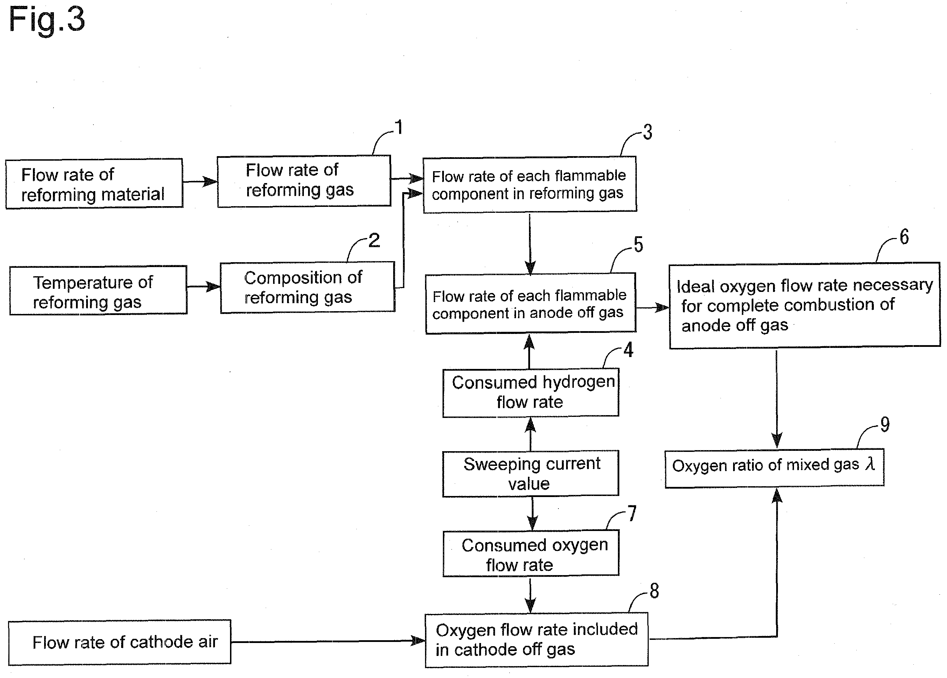

Next, at the step S203, the control device 15 (instruction material flow rate calculating portion) starts calculation of the composition of the reforming gas referring to the mapping data shown in Fig. 4, based on the temperature of the reforming portion 33 detected by the reforming portion temperature sensor 33a. (Numeral 2 of the flowchart in Fig. 3). After the process of the step S203 ends, the control device 15 advances the program to the step S204.

At the step S204, the control device 15 (instruction material flow rate calculating portion) starts calculation of flow rate of the hydrogen consumed at the fuel cell 34 based on the sweeping current swept from the fuel cell 34 by the inverter device 13. (Numeral 4 of the flowchart of Fig. 3). After the process of the step S204 ends, the control device 15 advances the program to the step S205.

At the step S205, the control device 15 (instruction material flow rate calculating portion) starts calculation of the flow rate of the oxygen consumed at the fuel cell 34 based on the sweeping current swept from the fuel cell 34 by the inverter device 13. (Numeral 7 of the flowchart in Fig. 3). Next, the control device 15 (instruction material flow rate calculating portion) starts calculation of the flow rate of the oxygen contained in the cathode off gas supplied from the fuel cell 34 to the combustion portion 36 based on the flow rate of the cathode air detected by the cathode air flow rate sensor 11 c3 and the flow rate of the oxygen consumed at the fuel cell 34. (Numeral 8 of the flowchart in Fig. 3) After the process of the step S205 ends, the control device 15 advances the program to the step S206.

At the step S206, the control device 15 starts counting by the timer TM. After the process of the step S206 ends, the control device 15 advances the program to the step S207.

At the step S207, when the control device 15 judges that the timer TM indicates a defined time TMa (for example, one day) has passed (Step S207: YES), the control device 15 advances the program to the step S208. On the other hand, when the control device 15 judges that the timer TM indicates the defined time TMa has not passed yet (Step S207; NO), the control device 15 repeats the process of the step S207.

At the step S208, the control device 15 (instructing portion, instruction material flow rate calculating portion) calculates the instruction material flow rate Fa which corresponds to the judging oxygen ratio λa based on the reforming gas composition which calculation started at the step S203, the consumed hydrogen flow rate at the fuel cell 34 which calculation started at the step S204 and the flow rate of the oxygen which is contained in the cathode off gas which calculation is performed at the step S205, by the method explained with reference to the flowchart in Fig. 3. It is noted that the judging oxygen ratio λa is the oxygen ratio of the mixed gas introduced into the combustion portion 36 so that the calculated flammable gas including the ventilation air amount Q at the sensor arranging portion 60 is adjusted to be the instruction concentration C1, upon judgment whether the detection sensitivity of the flammable gas sensor 58 is deteriorated or not. It is preferable that the judging oxygen ratio λa is equal to or more than one (1). When the oxygen ratio λ of the mixed gas introduced into the combustion portion 36 is set to be the judging oxygen ratio λa of less than one (1), a soot dust may be generated due to the incomplete combustion of the flammable gas at the combustion portion 36 and downstream side fluid passage relative to the combustion portion 36 may be clogged by such soot dust. It is also noted that the instruction material flow rate Fa is a flow rate of the reforming material supplied by the material pump 11a1 which makes the oxygen ratio to be the judging oxygen ratio λa, keeping the values of the sweeping current from the fuel cell 34 and the flow rate of the cathode air supplied to the fuel cell 34. After the process at the step S208 ends, the control device 15 advances the program to the step S209.

At the step S209, the control device 15 (instructing portion, oxygen ratio changing portion) feedback controls the material pump 11a1 so that the flow rate of the reforming material supplied by the material pump 11a1 becomes the instruction material flow rate Fa calculated at the step S208 based on the flow rate of the reforming material detected by the reforming material flow rate sensor 11 a3. Thus, the concentration of the flammable gas at the sensor arranging portion 60 becomes the instruction concentration C1. By this control, compared to the case before the process at the step S209 is executed, the supply amount of the reforming material supplied by the material pump 11a1 becomes larger. It is noted that the control device 15 (instructing portion, oxygen ratio changing portion) controls the material pump 11a1 so that the flow rate of the reforming material supplied by the material pump 11a1 becomes gradually increasing to the instruction material flow rate Fa after the predetermined time period (for example, several ten seconds) elapsed. Thus, a partial blow-out of the flame or a complete blow-out of the flame at the combustion portion 36 due to a sudden increase of the reforming material can be prevented. By this process at the step S209, the oxygen ratio λ of the mixed gas introduced to the combustion portion 36 gradually becomes the judging oxygen ratio λa. Further, the control device 15 increases the flow rate of the reforming water supplied to the evaporating portion 32 by the reforming pump 11 b2 by a predetermined amount compared to the flow rate thereof before the start of process at the step S209. Thus, the generation of calking in the reforming portion 33 according to the increase of flow rate of the reforming material supplied to the evaporating portion 32 can be prevented. After the process at the step S209 ends, the control device 15 advances the program to the step S210.

At the step S210, the control device 15 (judging portion) reads the output value V1 of the flammable gas sensor 58.

Next, at the step S211, the control device 15 (judging portion) judges whether the output value V1 of the flammable gas sensor 58 relative to instruction the concentration C1 of the flammable gas at the sensor arranging portion 60 is within the predetermined value or not. The meaning of "the output value V1 is within the predetermined value" is that the output performance of the flammable gas sensor 58 is within the threshold value set in advance at the normal operation as indicated with a solid line in Fig. 2.

When the output value V1 of the flammable gas sensor 58 is within the predetermined value, the control device 15 (judging portion) judges "YES" at the step S211 and the program goes to the step S212. At the step S212, the control device 15 (judging portion) judges that the detection sensitivity of the flammable gas sensor 58 is normal and advances the program to the step S213.

At the step S213, the control device 15 resets the timer TM and advances the program to the step S206.

At the step S211, when the output value V1 of the flammable gas sensor 58 is not within the predetermined value, the control device 15 (judging portion) judges "NO" and the program goes to the step S214. At the step S214, the control device 15 (judging portion) judges whether the predetermined time period t1 (for example, from several to several ten seconds) has elapsed or not. If the predetermined time period t1 has not elapsed, the control device 15 (judging portion) judges "NO" and the program returns to the step S210.

At the step S214, when the predetermined time period t1 has elapsed, the control device 15 (judging portion) judges "YES" and the program goes to the step S215.

At the step S215, the control device 15 (judging portion) finalizes the judgment result that the detection sensitivity of the flammable gas sensor 58 is deteriorating and the program goes to the step S216. The control device 15 activates the informing portion 17 to inform the abnormality. After the process of the step S216, the second detection sensitivity deterioration judging process ends. It is noted that the time period t1 at the step S214 is provided for strictly finalize the judgments result that the detection sensitivity of the flammable gas sensor 58 has been deteriorated.

### (Advantageous Effects of the Embodiment)

The control device (judging portion) can perform the judgment whether the detection sensitivity of the flammable gas sensor 58 is deteriorated or not based on the output value V1 of the flammable gas sensor 58 relative to the instruction concentration C1 by flowing the flammable gas at the sensor arranging portion 60 with the instruction concentration C1 during the operation of the fuel cell system 100. Accordingly, it is not necessary to stop the fuel cell system 100 only for the purpose of judging whether the detection sensitivity of the flammable gas sensor 58 is deteriorated or not and the judging can be made, keeping the operation of the electricity generation at the fuel cell system 100 and the generation of the reserved hot water.

Further, the control device 15 (instructing portion, oxygen ratio changing portion) changes the oxygen ratio λ of the mixed gas introduced into the combustion portion 36 to the judging oxygen ratio λa by increasing the flow rate of the reforming material to be supplied by the material pump 11 a5 (fuel supplying portion) compared to the case before the oxygen ratio λ of the mixed gas to be introduced into the combustion portion 36 is changed to the judging oxygen ratio λa. (Step S209 in Fig. 6). Thus, the flow rate of the flammable gas contained in the anode off gas supplied to the combustion portion 36 can be surely increased thereby changing the oxygen ratio λ of the mixed gas introduced into the combustion portion 36 to the judging oxygen ratio λa. Accordingly, the incomplete combustion state is generated at the sensor arranging portion 60 and the flammable gas contained in the anode off gas which is not burned at the combustion portion 36 can be surely introduced into the sensor arranging portion 60 thereby to have the concentration of the flammable gas at the sensor arranging portion 60 to be the instruction concentration C1. Thus, the judgment whether the detection sensitivity of the flammable gas sensor 58 is deteriorated or not can be surely made. Further, upon changing the oxygen ratio to the judging oxygen ratio λa, since the supply amount of the reforming material is increased instead of decreasing the supply amount of the oxidant gas (oxygen), the system stopping of the fuel cell system 100 due to the insufficient supply of the oxygen can be prevented. Thus, the judgment whether the detection sensitivity of the flammable gas sensor 58 is deteriorated or not can be made, keeping the fuel cell system 100 to be in operation state, without stopping.

Further, the control device 15 (instructing portion, oxygen ratio changing portion) judges whether the detection sensitivity of the flammable gas sensor 58 is deteriorated or not by changing the oxygen ratio λ of the mixed gas introduced into the combustion portion 36 to the judging oxygen ratio λa by increasing the flow rate of the reforming material to be supplied by the material pump 11 a5 (fuel supplying portion) under the state that the sweeping current swept from the fuel cell 34 is kept constant. (Step S209 in Fig. 6). By this control, since the sweeping current swept from the fuel cell 34 is not decreased, the electric current to be supplied to the external electric power load 16c is sufficiently supplied.

Further, the control device 15 (instructing portion, instruction material flow rate calculating portion) calculates the instruction material flow rate Fa which is a flow rate of the reforming material wherein the oxygen ratio λ of the mixed gas introduced into the combustion portion 36 becomes the judging oxygen ratio λa, based on the sweeping current which is an electric current swept from the fuel cell 34 and the flow rate of the cathode air supplied to the fuel cell 34 (Step S208 of Fig. 6). Then the control device 15 (instructing portion, oxygen ratio changing portion) controls the material pump 11a1 so that the flow rate of the reforming material supplied by the material pump 11a1 becomes the instruction material flow rate Fa. (Step S209 of Fig. 6). By this control, the oxygen ratio λ of the mixed gas supplied to the combustion portion 36 can highly accurately agree to the judging oxygen ratio λa. Accordingly, the incomplete combustion state is generated at the sensor arranging portion 60 and the flammable gas contained in the anode off gas which is not burned at the combustion portion 36 can be surely introduced into the sensor arranging portion 60 thereby to have the concentration of the flammable gas at the sensor arranging portion 60 to be the instruction concentration C1. Thus, the judgment whether the detection sensitivity of the flammable gas sensor 58 is deteriorated or not can be surely made.

Further, the control device 15 (instructing portion, instruction material flow rate calculating portion) calculates the instruction material flow rate Fa, based on the temperature T1 of the reforming portion 33 detected by the reforming portion temperature sensor 33a (reforming temperature detecting portion) (Step S208 of Fig. 6). In other words, the control device 15 (instructing portion, instruction material flow rate calculating portion) calculates the composition of the reforming gas generated at the reforming portion 33 based on the temperature of the reforming portion 33. (Numeral 2 of Fig. 3; Step S203 of Fig. 6). Then the control device 15 (instructing portion, instruction material flow rate calculating portion) calculates the instruction material flow rate Fa based on the calculated composition of the reforming gas. Thus, the instruction material flow rate Fa in which the oxygen ratio λ of the mixed gas to be introduced into the combustion portion 36 becomes the judging oxygen ratio λa can be more accurately calculated based on the composition of the reforming gas, comparing with the case where the instruction material flow rate Fa is calculated not based on the composition of the reforming gas. Thus, the oxygen ratio λ of the mixed gas introduced into the combustion portion 36 becomes the judging oxygen ratio λa more accurately.

Thus, the oxygen ratio λ of the mixed gas introduced into the combustion portion 36 becomes more accurately to the judging oxygen ratio λa. Thus, the soot dust generated at the combustion portion 36 due to the extremely large drop of the oxygen ratio λ (for example, the ratio less than one (1) can be prevented.

### (Third Detection Sensitivity Deterioration Judging Process)

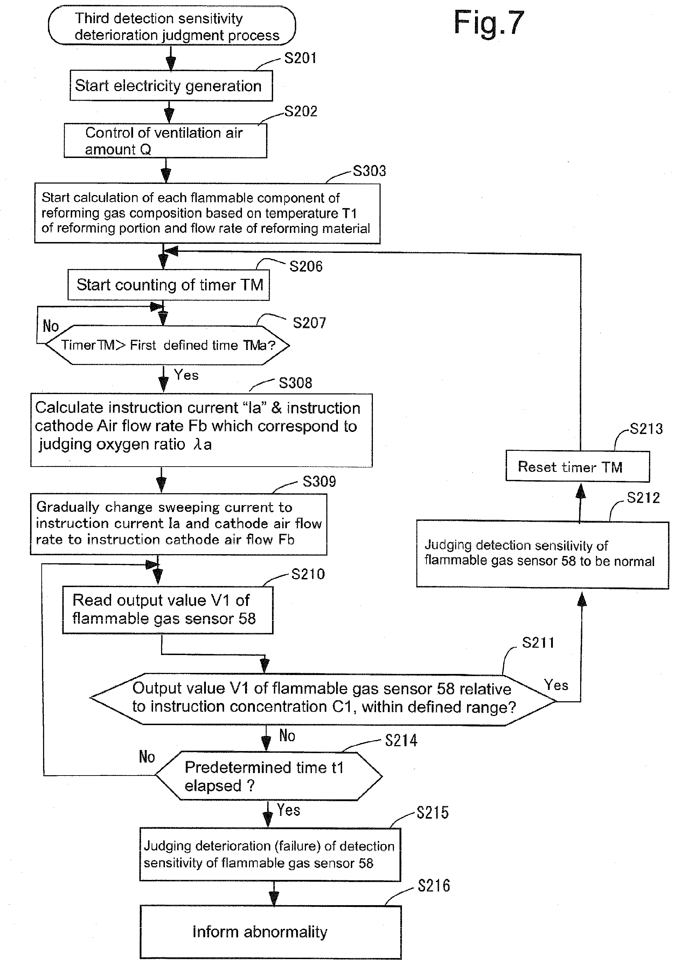

The third detection sensitivity deterioration judging process will be explained hereinafter with reference to the flowchart shown in Fig. 7. It is noted that steps of the third detection sensitivity deterioration judging process which are the same to the steps of the second detection sensitivity deterioration judging process are referred to as the same step numbers with those of the second detection sensitivity deterioration judging process and the explanation thereof will be omitted. The third detection sensitivity deterioration judging process is a judging method for judging whether the detection sensitivity of the flammable gas sensor 58 is deteriorated or not based on the output value V1 of the flammable gas sensor 58 relative to the instruction concentration C1 by adjusting the oxygen ratio λ of the mixed gas supplied to the combustion portion 36 to be the judging oxygen ratio λa so that the concentration of the flammable gas at the sensor arranging portion 60 becomes the instruction concentration C1 by decreasing sweeping current swept from the fuel cell 34 and the flow rate of the cathode air supplied to the fuel cell 34, keeping the value of flow rate of the reforming material supplied to the evaporating portion 32, i.e., keeping the value of flow rate of the reforming gas supplied to the fuel cell 34.

Instead of executing of the process at the step S203, the process of the step S303 is executed. At the step S303, the control device 15 (instruction current calculating portion, instruction cathode air flow rate calculating portion) starts calculation of the flow rate of the reforming gas supplied to the fuel cell 34 from the reforming portion 33 based on the flow rate of the reforming material supplied to the evaporating portion 32 detected by the reforming material flow rate sensor 11a3. (Numeral 1 of Fig. 3). Further, the control device 15 (instruction current calculating portion, instruction cathode air flow rate calculating portion) starts calculation of the composition of the reforming gas supplied to the fuel cell 34 from the reforming portion 33 based on the same method as the method indicated in the process at the step S203. (Numeral 2 of Fig. 3). Next, the control device 15 (instruction current calculating portion, instruction cathode air flow rate calculating portion) starts calculation of the flow rate of each flammable gas component of the reforming gas supplied to the fuel cell 34 based on the flow rate and the composition of the reforming gas supplied to the fuel cell 34 by the method explained above with reference to Fig. 3. (Numeral 3 of Fig. 3). After the process of the step S303 ends, the control device 15 advances the program to the step S206.

Instead of the execution of the process at the step S208, the process of the step S308 is executed. At the step S308, the control device 15 (instructing portion, instruction current calculating portion, instruction cathode air flow rate calculating portion) calculates the instruction current "la" which is a sweeping current swept from the fuel cell 34 and the instruction cathode air flow rate Fb as the judging oxygen ratio λa based on each flammable component of the reforming gas calculated at the step S303 by the method explained above with reference to Fig. 3. It is noted that the judging oxygen ratio λa is the oxygen ratio of the mixed gas introduced into the combustion portion 36 so that the flammable gas calculated by including the ventilation air amount Q at the sensor arranging portion 60 is adjusted to be the instruction concentration C1, upon judgment whether the detection sensitivity of the flammable gas sensor 58 is deteriorated or not. When the sweeping current is set to be the instruction current Ia which is smaller than the present sweeping current value, the flow rate of the hydrogen and the oxygen consumed at the fuel cell 34 decreases. Thus, under the value of flow rate of the reforming gas to be supplied to the fuel cell 34 being kept, if the flow rate of the cathode air decreases by an amount corresponding to the decrease amount of the flow rate of the oxygen consumed at the fuel cell 34, only the flow rate of the hydrogen consumed at the fuel cell 34 decreases and the flow rate of the hydrogen contained in the mixed gas supplied to the combustion portion 36 increases. Thus, the oxygen ratio λ of the mixed gas supplied to the combustion portion 36 decreases. By using such method, the control device 15 calculates the instruction current "Ia" and the instruction cathode air flow rate Fb. After the process at the step S308 ends, the control device 15 advances the program to the step S309.

At the step S309, the control device 15 (instructing portion, oxygen ratio changing portion) controls the inverter device 13 so that the sweeping current from the fuel cell 34 is gradually changed to be the instruction current "Ia" calculated at the step S308 with a predetermined time (for example, several to several ten seconds). At the same time, the control device 15 (instructing portion, oxygen ratio changing portion) feedback controls cathode air blower 11c1 so that the cathode air flow supplied to the fuel cell 34 is gradually changed to be the instruction cathode air flow rate Fb calculated at the step S308 with a predetermined time (for example, several to several ten seconds), based on the cathode air flow detected by the cathode air flow rate sensor 11 c3. Thus, the concentration of the flammable gas at the sensor arranging portion 60 becomes the instruction concentration C1. By such gradual change of the sweeping current and the flow rate of the cathode air, a partial blow-out of the flame or a complete blow-out of the flame at the combustion portion 36 caused by such a sudden change of the flow rate of the mixed gas and the flammable component of the mixed gas supplied to the combustion portion 36 can be prevented. By the process at the step S309, the oxygen ratio λ of the mixed gas introduced into the combustion portion 36 gradually becomes the judging oxygen ratio λa. After the process at the step S309 ends, the control device 15 advances the program to the step S210.

As stated above, the control device 15 (instructing portion, oxygen ratio changing portion) controls the inverter device 13 (sweeping current changing portion) so that the sweep is decreased compared to the case before the oxygen ratio λ of the mixed gas supplied to the combustion portion 36 becomes the judging oxygen ratio λa and at the same time controls the cathode air blower 11c1 (cathode air supplying portion) so that the flow rate of the cathode air decreases by the amount of flow rate of the cathode air (oxidant gas) corresponding to the decrease of the sweeping current, thereby changing the oxygen ratio λ of the mixed gas supplied to the combustion portion 36 to the judging oxygen ratio λa (Step S309 of Fig. 7).

Accordingly, by decreasing the sweeping current, the flow rate of the hydrogen consumed at the fuel cell 34 decreases and then the flow rate of the hydrogen introduced into the combustion portion 36 increases. Further, by decreasing the sweeping current, the flow rate of the oxygen consumed at the fuel cell 34 decreases but the flow rate of the cathode air decreases by the amount corresponding to the decrease of the sweeping current. Therefore, the flow rate of the oxygen supplied to the combustion portion 36 does not increase. Thus, the flow rate of the oxygen introduced into the combustion portion 36 is not increased and the flow rate of the flammable component supplied to the combustion portion 36 can be surely increased, thereby changing the oxygen ratio λ of the gas supplied to the combustion portion 36 to the judging oxygen ratio λa. Therefore, the incomplete combustion state is generated at the combustion portion 36 and the flammable gas contained in the anode off gas which has not been burned at the combustion portion 36 can be surely introduced into the sensor arranging portion 60 thereby to have the concentration of the flammable gas at the sensor arranging portion 60 to be the instruction concentration C1. Thus, the judgment whether the detection sensitivity of the flammable gas sensor 58 is deteriorated or not can be surely made.

Thus, without increasing the flow rate of the reforming material, the oxygen ratio of the mixed gas introduced into the combustion portion 36 can be changed to the judging oxygen ratio λa thereby to judge whether the detection sensitivity of the flammable gas sensor 58 is deteriorated or not. Thus, the overheating of the fuel cell module 11 derived from the increase of the flow rate of the reforming material can be prevented.

The control device 15 (instruction current calculating portion) calculates the instruction current "la" which is the electric current swept from the fuel cell 34 in which the oxygen ratio λ of the mixed gas introduced into the combustion portion 36 becomes the judging oxygen ratio λa, based on the flow rate of the mixed gas introduced into the combustion portion 36 by the material pump 11a1 (Step S308 of Fig. 7). Then the control device 15 (instruction cathode air flow rate calculating portion) calculates the instruction cathode air flow rate Fb which corresponds to the flow rate of the cathode air in which the oxygen ratio λ of the mixed gas introduced into the combustion portion 36 becomes the judging oxygen ratio λa, based on the flow rate of the cathode air supplied by the cathode air blower 11c1 and the calculated instruction current Ia (Step S308 of Fig. 7). Further, the control device 15 (instructing portion, oxygen ratio changing portion) controls the inverter device 13 so that the sweeping current swept from the fuel cell 34 becomes the instruction current "Ia" and controls the cathode air blower 11c1 so that the flow rate of the cathode air supplied to the fuel cell 34 becomes the instruction cathode air flow rate Fb. (Step S309 of Fig. 7).

As stated, the instruction current "Ia in which the oxygen ratio λ of the mixed gas becomes the judging oxygen ratio λa is calculated, the sweeping current swept from the fuel cell 34 is changed to the instruction current Ia, the instruction cathode air flow rate Fb in which the oxygen ratio λ of the mixed gas becomes the judging oxygen ratio λa is calculated and the flow rate of the cathode air supplied by the material pump 11a5 is changed to the instruction cathode air flow rate Fb. Thus, the oxygen ratio λ of the mixed gas surely and highly accurately can be changed to the judging oxygen ratio λa. Accordingly, incomplete combustion state can be surely generated at the combustion portion 36 and the flammable gas contained in the anode off gas which has not been burned at the combustion portion 36 can be more surely introduced into the sensor arranging portion 60 thereby to have the concentration of the flammable gas at the sensor arranging portion 60 to be the instruction concentration C1. Therefore, the judgment whether the detection sensitivity of the flammable gas sensor 58 is deteriorated or not can be more surely performed.

Further, the control device 15 (instruction current calculating portion) calculates the instruction current "Ia" based on the temperature T1 of the reforming portion 33 detected by the reforming portion temperature sensor 33a (reforming portion temperature detecting portion). In other words, the control device 15 (instruction material flow rate calculating portion) calculates the composition of the reforming gas generated by the reforming portion 33 based on the temperature T1 of the reforming portion (Numeral 2 of the flowchart in Fig.3, step S303 of Fig. 7). Then, the control device 15 (instructing portion, instruction material flow rate calculating portion) calculates the instruction current "la" based on the calculated composition of the reforming gas. Therefore, the instruction material flow rate Fa in which the oxygen ratio λ of the mixed gas introduced into the combustion portion 36 becomes the judging oxygen ratio λa more accurately, comparing to the case that the calculation is not based on the composition of the reforming gas. Therefore, the oxygen ratio λ of the mixed gas supplied to the combustion portion 36 can be changed to the judging oxygen ratio λa more accurately.

### (Different Embodiments)

According to the embodiments explained above, the oxygen ratio λ of the mixed gas introduced into the combustion portion 36 is set to the value of the judging oxygen ratio λa which is lower than an incomplete combustion state starting oxygen ratio λ0 and at the combustion portion 36, the anode off gas is incompletely burned thereby to increase the flow rate of the flammable gas contained in the combustion discharge gas introduced into the sensor arranging portion 60. Thus, the concentration of the flammable gas at the sensor arranging portion 60 is set to the instruction concentration C1. However, not only the case where the oxygen ratio λ of the mixed gas introducer into the combustion portion 36 is set to the value of the judging oxygen ratio λa which is lower than an incomplete combustion state starting oxygen ratio λ0, but also the case where the judging oxygen ratio λa is set to be higher than the oxygen ratio λ under normal operation (for example ratio of 1.6) can be within the scope of the invention. When the judging oxygen ratio λa is set to be higher than the oxygen ratio λ under normal operation, the flow rate of the flammable gas contained in the anode off gas becomes too small relative to the flow rate of the oxygen (lean fuel state) to stop combustion partially at the combustion portion 36. This can more surely introduce the flammable gas contained in the anode off gas which has not been burned at the combustion portion 36 into the sensor arranging portion 60. Thus, the concentration of the flammable gas at the sensor arranging portion 60 can be accurately changed to the instruction concentration C1.

According to the embodiments explained above, the composition of the reforming gas is calculated based on the temperature T1 of the reforming portion 33 detected by the reforming portion temperature sensor 33a (reforming portion temperature detecting portion). However, another embodiment which is different therefrom may be applicable to the invention wherein, a temperature sensor (reforming portion temperature detecting portion) which detects the temperature of the reforming gas flowing out of the reforming portion 33 may be provided and based on the temperature of the reforming gas detected by this sensor, the composition of the reforming gas may be calculated.

### (Fourth Detection Sensitivity Deterioration Judging Process)

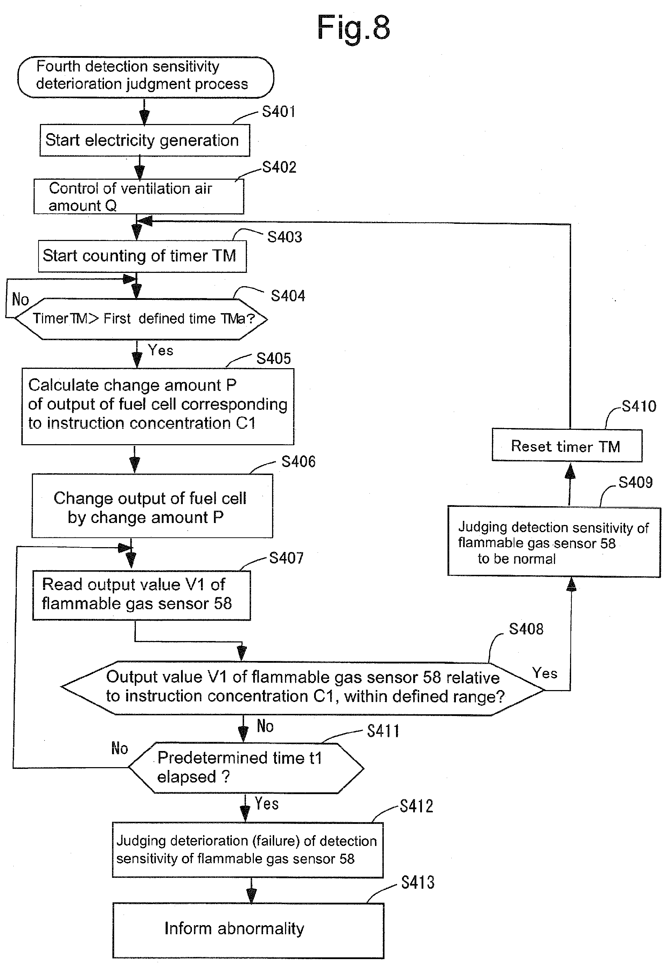

The fourth detection sensitivity deterioration judging process will be explained with reference to the flowchart shown in Fig. 8. The fourth detection sensitivity deterioration judging process is a method for judging whether the detection sensitivity of the flammable gas sensor 58 is deteriorated or not based on the output value V1 of the flammable gas sensor 58 relative to the instruction concentration C1 by changing the concentration of the flammable gas at the sensor arranging portion 60 to the instruction concentration C1 by utilizing the generation of the partial combustion stopping state derived from the generation of the incomplete combustion state or the fuel lean state at the combustion portion 36 during a transition of sudden change of the output of the fuel cell 34, while the fuel cell 34 is under electricity generation operation. When the fuel cell system 100 is activated, the control device 15 advances the program to the step S401.

At the step S401, the control device 15 controls the material pump 11a1, the cathode air blower 11c1 and the reforming water pump 11b2 and ignites the ignition heaters 36a1 and 36a2 to start generation of electricity at the fuel cell 34. After the process of the step S401, the control device 15 advances the program to the step S402.

At the step S402, the control device 15 drives the ventilation fan motors 54a and 55a with a predetermined duty Yd to ventilate the inside of the housing 10a with a predetermined ventilation air flow rate Q. Thus, the ventilation fan 54 is operated and the oxidant gas (air) is introduced into the inside of the housing 10a from the intake port 11c and at the same time by the operation of the ventilation fan 55, the air (ventilated air) inside the housing 10a is discharged outside of the housing 10a from the ventilation discharge port 10d via the ventilation discharge passage 56 to perform ventilation of the inside air of the housing 10a. Thus, the ventilation air flow rate Q flows through the sensor arranging portion 60.

Next, at the step S403, the control device 15 starts counting of the timer TM. After the process of the step S403, the control device 15 advances the program to the step S404.

At the step S404, when the control device 15 judges that the timer TM indicates the defined time TMa (for example, one day) has passed (Step S404; YES), the program goes to the step S405. On the other hand, when the control device 15 judges that the timer TM indicates the defined time TMa has not passed yet (Step S404; NO), the control device 15 repeats the process of the step S404.

At the step S405, the control device 15 (instructing portion) calculates the change amount P of the output of the fuel cell 34 in which the concentration of the flammable gas at the sensor arranging portion 60 calculated including the ventilation air flow rate Q is set to the instruction concentration C1. If the output of the fuel cell 34 is suddenly changed, during the transition time of such output changing, for example, if the reforming material (fuel) is suddenly changed to be increased to increase the output of the fuel cell 34, the anode off gas is incompletely burned at the combustion portion 36 during the transition time of changing. Then the flow rate of the flammable gas contained in the anode off gas which has not been burned at the combustion portion 36 is increased to thereby surely introduce the flammable gas into the sensor arranging portion 60. Thus the concentration of the flammable gas at the sensor arranging portion 60 can be changed to the instruction concentration C1. On the contrary, if the reforming material (fuel) is suddenly changed to be decreased to decrease the output of the fuel cell 34, the flow rate of the flammable gas contained in the anode off gas relative to the flow rate of the oxygen during the transition time is too small (fuel lean state) to partially stop the combustion at the combustion portion 36. Thus, the flammable gas contained in the anode off gas which has not been burned at the combustion portion 36 can be more surely introduced into the sensor arranging portion 60. This can also make the concentration of the flammable gas at the sensor arranging portion 60 to be the instruction concentration C1. When the sweeping current swept from the fuel cell 34 is suddenly changed to increase or decrease in order to change the output of the fuel cell 34, there occurs a difference between the flow rate of the hydrogen and the oxygen consumed at the fuel cell 34 during the transition time of the increase or decrease changing of the sweeping current and similar to the transition time of the increase or decrease of the reforming material, the combustion portion 36 becomes in an incomplete combustion state or in a fuel lean state. Then the flow rate of the flammable gas contained in the anode off gas which has not been burned at the combustion portion 36 can be surely introduced into the sensor arranging portion 60. Thus the concentration of the flammable gas at the sensor arranging portion 60 can be changed to the instruction concentration C1. Accordingly, the change amount P of the output of the fuel cell 34 can be applicable in either by the increase change or by decrease change. After the process of the step S405, the control device 15 advances the program to the step S406.

At the step S406, the control device 15 (instructing portion) changes the output of the fuel cell 34 by the change amount P calculated at the step S405. By this process, the concentration of the flammable gas at the sensor arranging portion 60 can be changed to the instruction concentration C1. After the process of the step S406, the control device 15 advances the program to the step S407.

At the step S407, the control device 15 (judging portion) reads the output value V1 of the flammable gas sensor 58.

Next, the program goes to the step S408. At the step S408, the control device 15 judges whether the output value V1 of the flammable gas sensor 58 relative to the instruction concentration C1 of the flammable gas at the sensor arranging portion 60 is within the predetermined value or not. The meaning of "the output value V1 is within the predetermined value" is that the output performance of the flammable gas sensor 58 is within the threshold value set in advance at the normal operation as indicated with a solid line in Fig. 2.

When the output value V1 of the flammable gas sensor 58 is within the predetermined value, the control device (judging portion) judges "YES" at the step S408 and the program goes to the step S409. At the step S409, the control device (judging portion) judges that the detection sensitivity of the flammable gas sensor 58 is normally operated and advances the program to the step S410.

At the step S410, the control device 15 resets the timer TM and advances the program to the step S403.

At the step S408, when the output value V1 of the flammable gas sensor 58 is not within the predetermined value, the control device (judging portion) judges "NO" and the program goes to the step S411. At the step S411, the control device (judging portion) judges whether the predetermined time t1 (for example, several to several ten seconds) has passed or not. If the predetermined time t1 has not passed, the control device (judging portion) judges "NO" and the program returns to the step S407.

At the step S411, If the predetermined time t1 has passed, the control device (judging portion) judges "YES" and the program goes to the step S412.

At the step S412, the control device 15 (judging portion) finalizes the judgment result that the detection sensitivity of the flammable gas sensor 58 is deteriorated. Then, the program goes to the step S413. At the step S413, the control device 15 (judging portion) operates the informing portion 17 to inform the abnormality. After the process of the step S413, the fourth detection sensitivity deterioration judging process ends. It is noted that the time period t1 at the step S411 is a time period set for strictly finalizing the judgment result that the detection sensitivity of the flammable gas sensor 58 has been deteriorated.

According to the fuel cell system 100 associated with the embodiment of the invention, the system 100 includes a fuel cell 34 which generates electricity by fuel supplied to an anode 34p and an oxidant gas supplied to a cathode 34q, a combustion portion 36 which burns an anode off-gas from the fuel cell and a cathode off-gas from the fuel cell 34 to generate a combustion exhaust gas, a casing 31 formed by a heat-insulating material and accommodating therein the fuel cell 34 and the combustion portion 36, a housing 10a which accommodates the casing 31 therein and provided with a ventilation discharge port 10d discharging the air ventilated inside the housing 10a out of the housing 10a, a discharge passage 50 connected to the casing 31 and discharging the combustion exhaust gas flowing from the casing 31 out of the housing 10a, a flammable gas sensor 58 provided at a sensor arranging portion 60 positioned in the discharge passage 50 at downstream side of a merging point 57 of the ventilated air and the combustion exhaust gas for detecting a concentration of the flammable gas, an instructing portion 15 (S101-S106,S208-S209,S308-S309,S405-S406) which instructs the flammable gas to flow through the sensor arranging portion 60 with an instruction concentration C1 and a judging portion 15 (S108,S211,S408) which judges whether or not a detection sensitivity of the flammable gas sensor 58 is deteriorated based on an output value V1 of the flammable gas sensor 58 relative to the instruction concentration C1. By this arrangement, since the a flammable gas sensor 58 is provided at the sensor arranging portion 60 positioned in the discharge passage 50 at downstream side of the merging point 57 of the ventilated air and the combustion exhaust gas from the inside of the housing 10a, the flammable gas sensor 58 can detect the flammable gas which is leaked out from the inside of the housing 10a and reached to the sensor arranging portion 60 where the leaked flammable gas is to be detected. Since the instructing portion 15 (S101-S106,S208-S209,S308-S309,S405-S406) instructs the flammable gas to flow with the instruction concentration C1 through the sensor arranging portion 60, the judging portion 15 (S108,S211,S408) can judge whether the detection sensitivity of the flammable gas sensor 58 is deteriorated or not based on the output value V1 of the flammable gas sensor 58 relative to the instruction concentration C1.

The fuel cell system 100 associated with the embodiment of the invention further includes a reforming portion 33 which generates the fuel by a reforming material and a reforming water and supplies the fuel cell 34 with the fuel, wherein the instructing portion 15 (S101-S106) makes a concentration of the flammable gas in the sensor arranging portion 60 to be the instruction concentration C1 based on a control in which the reforming material with a concentration of a predetermined instruction value is sent towards the fuel cell 34, under a non-ignition state of the combustion portion 36. By this arrangement, since the flammable gas is flown to the sensor arranging portion 60 with the instruction concentration C1, the judging portion 15 (S108) can judge whether the detection sensitivity of the flammable gas sensor 58 is deteriorated or not based on the output value V1 of the flammable gas sensor 58 relative to the instruction concentration C1.

The fuel cell system 100 associated with the embodiment of the invention further includes a fuel supplying portion 11 a1 which supplies the reforming portion 33 with the reforming material, wherein the fuel supplying portion 11a1 includes a fuel pump 11a1 for supplying the reforming material, wherein the concentration of the flammable gas in the sensor arranging portion 60 is set to be the instruction concentration C1 based on a control of the fuel pump 11a1. By this arrangement, since the flammable gas is flown to the sensor arranging portion 60 with the instruction concentration C1, the judging portion 15 (S108) can judge whether the detection sensitivity of the flammable gas sensor 58 is deteriorated or not based on the output value V1 of the flammable gas sensor 58 relative to the instruction concentration C1.

The fuel cell system 100 associated with the embodiment of the invention further includes a cathode air supplying portion 11c1 which supplies the cathode 34q with the oxidant gas as a cathode air, wherein the cathode air supplying portion 11c1 includes a cathode air blower 11c1 and the concentration of the flammable gas in the sensor arranging portion 60 is set to be the instruction concentration C1, based on the control of the fuel pump 11a1 and a control of the cathode air blower 11c1. By this arrangement, since the flammable gas is flown to the sensor arranging portion 60 with the instruction concentration C1, the judging portion 15 (S108) can judge whether the detection sensitivity of the flammable gas sensor 58 is deteriorated or not based on the output value V1 of the flammable gas sensor 58 relative to the instruction concentration C1.

The fuel cell system 100 associated with the embodiment of the invention is characterized in that the cathode air blower 11c1 is provided in the housing 10a and a ventilation fan 55 is provided for discharging the ventilated air from the ventilation discharge port 10d outside the housing 10a and wherein the concentration of the flammable gas in the sensor arranging portion 60 is set to be the instruction concentration C1 based on the control of the fuel pump 11a1 and the control of the cathode air blower 11c1 and a control of the ventilation fan 55. By this arrangement, under the structure where the cathode air blower 11c1 is provided within the housing 10a, the setting of the instruction concentration C1 of the flammable gas which corresponds to the reforming material in the sensor arranging portion 60 can be easily made and the judgment whether the detection sensitivity of the flammable gas sensor 58 is deteriorated or not can be easily made.

The fuel cell system 100 associated with the embodiment of the invention is characterized in that the judging portion 15 (S108) periodically performs a judgment. By this arrangement, it is possible to perform a periodical diagnosis of the flammable gas sensor 58, adjusting the periodical activation timing of the fuel cell system 100. Accordingly, there is no need to stop ignition of the fuel cell system 100 just for performing the judgment whether the detection sensitivity of the flammable gas sensor 58 is deteriorated or not.

The fuel cell system 100 associated with the embodiment of the invention is characterized in that the instructing portion 15 (S208-S209,S308-S309) includes an oxygen ratio changing portion 15 (S209,S309) which makes the concentration of the flammable gas in the sensor arranging portion 60 to be the instruction concentration C1 by changing the oxygen ratio λ obtained by dividing a flow rate of the oxygen included in the cathode off gas introduced into the combustion portion 36 by an ideal flow rate of the oxygen necessary for performing a complete combustion of the flammable gas included in the anode off gas introduced into the combustion portion 36 to a judging oxygen ratio λa under an ignition state of the combustion portion. By this arrangement, since the flammable gas is flown to the sensor arranging portion 60 with the instruction concentration C1, the judging portion 15 (S211) can judge whether the detection sensitivity of the flammable gas sensor 58 is deteriorated or not, based on the output value V1 of the flammable gas sensor 58 relative to the instruction concentration C1. This judgment whether the detection sensitivity of the flammable gas sensor 58 is deteriorated or not can be performed under the fuel cell system 100 being in ignited state and accordingly, the judgment can be performed without stopping the ignition of the fuel cell system 100, but keeping the system 100 in operation state.

The fuel cell system 100 associated with the embodiment of the invention is characterized in that the oxygen ratio changing portion 15 (S209,S309) makes the judging oxygen ratio λa to be changed more than an incomplete combustion starting oxygen ratio λ0 by which an incomplete combustion of the flammable gas included in the anode off gas in the combustion portion occurs. By changing the judging oxygen ratio λa to be lower than the incomplete combustion starting oxygen ratio λ0 to burn the anode off gas at the combustion portion 36 incompletely thereby increasing the flow rate of the flammable gas contained in the combustion exhaust gas introduced into the sensor arranging portion 60. Thus, the concentration of the flammable gas at the sensor arranging portion 60 can be changed to the instruction concentration C1. On the other hand, by changing the judging oxygen ratio λa to be higher than the oxygen ratio λ under normal operation (for example, the ratio: 1.6) to have the combustion portion 36 to be a state that the flow rate of the flammable gas contained in the anode off gas is such a small rate (fuel lean state) relative to the flow rate of the oxygen, thereby to partially stop the combustion in the combustion portion 36. The flammable gas contained in the anode off gas which has not been burned at the combustion portion 36 is introduced into the sensor arranging portion 60 to have the concentration of the flammable gas at the sensor arranging position 60 to be the instruction concentration C1. Thus the judgment whether the detection sensitivity of the flammable gas sensor 58 is deteriorated or not can be surely made based on the output value V1 of the flammable gas sensor 58, keeping the fuel cell system 100 to be in operation state.

The fuel cell system 100 associated with the embodiment of the invention is characterized in that the fuel cell system further includes a reforming portion 33 which generates the fuel by a reforming material and a reforming water and supplies the fuel cell 34 with the fuel and a fuel supplying portion 11a1 which supplies the reforming portion 33 with the reforming material, wherein the oxygen ratio changing portion 15 (S209) makes the oxygen ratio λ to be changed to the judging oxygen ratio λa by further changing the flow rate of the reforming material which is supplied by the fuel supplying portion 11a1 compared to a change before the oxygen ratio λ is changed to the judging oxygen ratio λa. Thus, by changing the flow rate of the reforming material to be in increasing side thereby to lower the judging oxygen ratio λa lower than the incomplete combustion starting oxygen ratio λ0 by which an incomplete combustion of the flammable gas included in the anode off gas in the combustion portion 36 occurs. By changing the judging oxygen ratio λa lower than the incomplete combustion starting oxygen ratio λ0 to burn the anode off gas at the combustion portion 36 incompletely thereby increasing the flow rate of the flammable gas contained in the combustion exhaust gas introduced into the sensor arranging portion 60 and the concentration of the flammable gas at the sensor arranging portion 60 can be changed to the instruction concentration C1. On the other hand, by changing the flow rate of the reforming material to be in decreasing side, the oxygen ratio changing portion 15 (S209) raises the judging oxygen ratio λa higher than the oxygen ratio (λ: for example 1.6) under normal operation to have the combustion portion 36 to be a state that the flow rate of the flammable gas contained in the anode off gas is such a small rate (fuel lean state) relative to the flow rate of the oxygen, thereby to partially stop the combustion in the combustion portion 36. The flammable gas contained in the anode off gas which has not been burned at the combustion portion 36 is introduced into the sensor arranging portion 60 to have the concentration of the flammable gas at the sensor arranging position 60 to be the instruction concentration C1. Thus the judgment whether the detection sensitivity of the flammable gas sensor 58 is deteriorated or not can be surely made based on the output value V1 of the flammable gas sensor 58, keeping the fuel cell system 100 to be in operation state. When the flow rate of the reforming material is increased to be changed to the judging oxygen ratio λa, instead of decreasing the supply of the cathode air, the supply of the fuel is increased and accordingly, an undesired stopping of the fuel cell system 100 due to the insufficient fuel supply to the fuel cell 34 can be prevented.

The fuel cell system 100 associated with the embodiment of the invention is characterized in that the system further includes a sweeping current changing portion 13 which changes a sweeping current to be swept from the fuel cell and a cathode air supplying portion 11c1 which supplies the cathode 34q with the oxidant gas as a cathode air, wherein the oxygen ratio changing portion 15 (S309) controls the sweeping current changing portion 13 so that the sweeping current is further changed compared to a change before the oxygen ratio is changed to the judging oxygen ratio and at the same time the oxygen ratio changing portion 15 (S309) controls the cathode air supplying portion 11c1 so that the flow rate of the cathode air is changed by the flow rate of the cathode air which corresponds to the change of the sweeping current, wherein the oxygen ratio λ is changed to the judging oxygen ratio λa. Thus, by the decreasing change of the sweeping current, the flow rate of the hydrogen contained in the fuel which is consumed at fuel cell 34 decreases and the hydrogen which is the flammable gas contained the anode off gas introduced into combustion portion 36 increases, but the flow rate of the cathode air changes in the decreasing side by the flow rate of the cathode air depending on the decrease amount of the sweeping current thereby not increasing the flow rate of the oxygen supplied to the combustion portion 36. Thus, the flow rate of the flammable gas supplied to the combustion portion 36 is surely increased without increasing the flow rate of the oxygen supplied to the combustion portion 36. Thus, the oxygen ratio λ of the mixed gas introduced into the combustion portion 36 can be lowered to the instruction oxygen ratio λa. Therefore, the incomplete burning at the combustion portion 36 can be surely generated and the flammable gas contained in the anode off gas which has not been burned at the combustion portion 36 can be surely introduced into the sensor arranging portion 60. On the other hand, as the sweeping current changes in increasing side, the flow rate of the hydrogen contained in the fuel consumed at the fuel cell increases and the flow rate of the hydrogen which is the flammable gas contained in the anode off gas introduced into the combustion portion 36 is decreased. Further, as the sweeping current changes in increasing side, the flow rate of the oxygen contained in the cathode air increases and the flow rate of the oxygen contained in the cathode off gas consumed at the combustion portion 36, but the flow rate of the cathode air changes in the decreasing side by the flow rate of the cathode air depending on the increase amount of the sweeping current thereby not decreasing the flow rate of the oxygen supplied to the combustion portion 36. Thus, without decreasing the flow rate of the oxygen supplied to the combustion portion 36, the flow rate of the flammable gas supplied to the combustion portion 36 can be surely decreased. Therefore, by setting the judging oxygen ratio λa higher than the oxygen ratio λ under normal operation (for example, 1.6), the flow rate of the flammable gas contained in the anode off gas becomes such a small rate (fuel lean state) relative to the flow rate of the oxygen, thereby to partially stop the combustion in the combustion portion 36. The flammable gas contained in the anode off gas which has not been burned at the combustion portion 36 is introduced into the sensor arranging portion 60 to have the concentration of the flammable gas at the sensor arranging position 60 to be the instruction concentration C1. Thus the judgment whether the detection sensitivity of the flammable gas sensor 58 is deteriorated or not can be surely made, keeping the fuel cell system 100 to be in operation state.

The fuel cell system 100 associated with the embodiment of the invention is characterized in that the system further includes an instruction material flow rate calculating portion 15 (S208) which calculates an instruction material flow rate Fa which corresponds to a flow rate of the reforming material by which the oxygen ratio λ is changed to the judging oxygen ratio λa, based on the sweeping current to be swept from the fuel cell 34 and the flow rate of the cathode air supplied to the cathode 34q as the oxidant gas, wherein the oxygen ratio changing portion 15 (S209) controls the fuel supplying portion 11a1 so that the flow rate of the reforming material becomes the instruction material flow rate Fa. Thus, the instruction material flow rate Fa by which the oxygen ratio λ is changed in decreasing side to become the judging oxygen ratio λa is calculated and the fuel supplying portion 11a1 is controlled so that the flow rate of the reforming material supplied by the fuel supplying portion 11a1 becomes the instruction material flow rate Fa. Thus, the oxygen ratio λ of the mixed gas supplied to the combustion portion 36 can be surely and highly accurately changed to the judging oxygen ratio λa. Therefore, an incomplete combustion can be surely generated at the combustion portion 36 and the flammable gas contained in the anode off gas which has not been burned at the combustion portion 36 is surely introduced into the sensor arranging portion 60. On the other hand, the instruction material flow rate Fa which changes the oxygen ratio λ to be increased to the judging oxygen ratio λa is calculated and the fuel supplying portion 11a1 is controlled so that the flow rate of the reforming material supplied by the fuel supplying portion 11a1 becomes the instruction material flow rate Fa. Thus, by raising the judging oxygen ratio λa higher than the oxygen ratio λ under normal operation (for example, 1.6), the flow rate of the flammable gas contained in the anode off gas becomes such a small rate (fuel lean state) relative to the flow rate of the oxygen, thereby to partially stop the combustion in the combustion portion 36. The flammable gas contained in the anode off gas which has not been burned at the combustion portion 36 is introduced into the sensor arranging portion 60 to have the concentration of the flammable gas at the sensor arranging position 60 to be the instruction concentration C1. Thus the judgment whether the detection sensitivity of the flammable gas sensor 58 is deteriorated or not can be surely made, keeping the fuel cell system 100 to be in operation state.

The fuel cell system 100 associated with the embodiment of the invention is characterized in that the system 100 further includes an instruction current calculating portion 15 (S308) which calculates an instruction current Ia which corresponds to a current swept from the fuel cell, by which the oxygen ratio λ is changed to the judging oxygen ratio λa, based on the flow rate of the reforming material which is supplied from the fuel supplying portion 11a1 and an instruction cathode air flow rate calculating portion 15 (S308) which calculates an instruction cathode air flow rate Fb which corresponds to a flow rate of the cathode air by which the oxygen ratio λ is changed to the judging oxygen ratio λa, based on the flow rate of the reforming material which is supplied from the fuel supplying portion 11a1 and the instruction current Ia calculated by the instruction current calculating portion 15 (S308), wherein the oxygen ratio changing portion 15 (S309) controls the sweeping current changing portion 13 so that the sweeping current swept from the fuel cell becomes the instruction current Ia and at the same time controls the cathode air supplying portion so that flow rate of the cathode air becomes the instruction cathode air flow rate Fb. By this structure, the instruction current Ia by which the oxygen ratio λ is changed to the judging oxygen ratio is calculated and the sweeping current swept from the fuel cell 34 is changed to the instruction current Ia. Then the instruction cathode air flow rate Fb by which the oxygen ratio λ is changed to the judging oxygen ratio λa is calculated to thereby change the cathode air flow rate supplied by the cathode air supplying portion 11c1 to the instruction cathode air flow rate Fb. By this arrangement, the oxygen ratio λ of the mixed gas supplied to the combustion portion 36 can be highly accurately and surely changed to the judging oxygen ratio λa. By this changing of the judging oxygen ratio λa to the ratio lower than the incomplete combustion start oxygen ratio λ0, the anode off gas is incompletely burned at the combustion portion 36 and the flow rate of the flammable gas contained in the combustion exhaust gas introduced into the sensor arranging portion 60 is increased. Thus the concentration of the flammable gas at the sensor arranging portion 60 can be changed to the instruction concentration C1. On the other hand, by changing the judging oxygen ratio λa to the value higher than the oxygen ratio λ under normal operation (for example, 1.6), the combustion portion 36 becomes a state that the flow rate of the flammable gas contained in the anode off gas is such a small rate (fuel lean state) relative to the flow rate of the oxygen, thereby to partially stop the combustion in the combustion portion 36. The flammable gas contained in the anode off gas which has not been burned at the combustion portion 36 is introduced into the sensor arranging portion 60 to have the concentration of the flammable gas at the sensor arranging position 60 to be the instruction concentration C1. Thus the judgment whether the detection sensitivity of the flammable gas sensor 58 is deteriorated or not can be surely made, keeping the fuel cell system 100 to be in operation state.

The fuel cell system 100 associated with the embodiment of the invention is characterized in that the system 100 further includes a reforming portion temperature detecting portion 33a which detects a temperature T1 of the reforming portion 33, wherein the instruction material flow rate calculating portion 15 (S208) calculates the instruction material flow rate Fa based on the temperature of the reforming portion 33 detected by the reforming portion temperature detecting portion 33a. By this arrangement, the instruction material flow rate calculating portion 15 (S208) can calculate the composition of the fuel formed by the reforming portion 33 based on the temperature of the reforming portion 33. Then, the instruction material flow rate calculating portion 15 (S208) calculates the instruction material flow rate Fa based on the composition of the fuel instruction material flow rate Fa based on the calculated temperature T1 of the reforming portion 33. Thus, compared to the case that the calculation of the instruction material flow rate Fa not based on the composition of the fuel, the instruction material flow rate Fa by which the oxygen ratio λ of the gas supplied to the combustion portion 36 is changed to the instruction material flow rate Fa can be highly accurately performed.

The fuel cell system 100 associated with the embodiment of the invention is characterized in that the system further includes a reforming portion temperature detecting portion 33a which detects a temperature T1 of the reforming portion 33, wherein the instruction current calculating portion 15 (S308) calculates the instruction current Ia based on the temperature T1 of the reforming portion detected by the reforming portion temperature detecting portion 33a. Thus, the composition of the fuel generated at the reforming portion 33 can be calculated based on the temperature T1 of the reforming portion 33. Thus the instruction current calculating portion 15 (S308) calculates the instruction current "la" based on the calculated composition of the fuel. Thus, compared to the case that the calculation of the instruction current is not based on the composition of the fuel, the instruction current Ia, by which the oxygen ratio λ of the mixed gas supplied to the combustion portion 36 is changed to the instruction oxygen ratio λa, can be highly accurately calculated.

The fuel cell system 100 associated with the embodiment of the invention is characterized in that the instructing portion 15 (S405-S406) makes the concentration of the flammable gas in the sensor arranging portion 60 to be the instruction concentration C1 by changing the output to the fuel cell, under an electricity generating state. By this arrangement, by changing the output of the fuel cell 34 suddenly and during the transition time of the sudden change, the combustion state of the combustion portion 36 can be an incomplete combustion state or a fuel lean state to be able to generate a partial combustion stopping state at the combustion portion 36. The flammable gas contained in the anode off gas is introduced into the sensor arranging portion 60 to have the concentration of the flammable gas at the sensor arranging portion 60 to be the instruction concentration C1. Thus the judgment whether the detection sensitivity of the flammable gas sensor 58 is deteriorated or not can be surely made, keeping the fuel cell system 100 to be in operation state.

It is noted that the invention can be achieved by combining each feature of a plurality of embodiments of the invention when such plurality of embodiments exists, unless otherwise described.

### [Explanation of Symbols and Numerals]

10a; housing, 10d; ventilation discharge port, 11a1; material pump (fuel pump, fuel supplying portion), 11c1; cathode air blower (cathode air supplying portion), 12; heat exchanger, 13; inverter device (sweeping current changing portion), 14; reservoir (reforming water supplying portion), 15; control device (instructing portion, judging portion, oxygen ratio changing portion, instruction material flow rate calculating portion, instruction current calculating portion, instruction cathode air flow rate calculating portion), 31; casing, 33; reforming portion, 33a; reforming portion temperature sensor (reforming portion temperature detecting portion), 34; fuel cell, 34p; fuel anode (anode), 34q; air cathode (cathode), 36; combustion portion, 50; combustion exhaust gas discharge port (discharge passage), 55; ventilation fan, 57; merging point, 58; flammable gas sensor, 60; sensor arranging portion, 100; fuel cell system.

A fuel cell system (100) includes a fuel cell (34) which generates electricity by fuel supplied to an anode (34p) and an oxidant gas supplied to a cathode (34q), a combustion portion (36) which burns an anode off gas from the fuel cell (34) and a cathode off-gas from the fuel cell to generate a combustion exhaust gas, a casing (31) formed by a heat-insulating material and accommodating therein the fuel cell (34) and the combustion portion (36), a housing (10a) which accommodates the casing (31) therein and provided with a ventilation discharge port (10d) discharging the air ventilated inside the housing (10a) out of the housing (10a), a discharge passage (50) connected to the casing (31) and discharging the combustion exhaust gas flowing from the casing out of the housing (10a), a flammable gas sensor (58) provided at a sensor arranging portion (60) positioned in the discharge passage (50) at downstream side of a merging point (57) of the ventilated air and the combustion exhaust gas for detecting a concentration of the flammable gas, an instructing portion (15) instructing the flammable gas to flow through the sensor arranging portion (60) with an instruction concentration (C1) and a judging portion (15) which judges whether or not a detection sensitivity of the flammable gas sensor (58) is deteriorated based on an output value (V1) of the flammable gas sensor (58) relative to the instruction concentration (C1).

## Claims

1. A fuel cell system comprising:
a fuel cell (34) which generates electricity by fuel supplied to an anode (34p) and an oxidant gas supplied to a cathode (34q);
a combustion portion (36) which burns an anode off gas from the fuel cell (34) and a cathode off gas from the fuel cell (34) to generate a combustion exhaust gas;
a casing (31) formed by a heat-insulating material and accommodating therein the fuel cell (34) and the combustion portion (36);
a housing (10a) which accommodates the casing (31) therein and provided with a ventilation discharge port (10d) discharging the air ventilated inside the housing (10a) out of the housing (10a);
a discharge passage (50) connected to the casing (31) and discharging the combustion exhaust gas flowing from the casing (31) out of the housing (10a);
a flammable gas sensor (58) provided at a sensor arranging portion (60) positioned in the discharge passage at downstream side of a merging point (57) of the ventilated air and the combustion exhaust gas for detecting a concentration of the flammable gas;
an instructing portion (15) which instructs the flammable gas to flow through the sensor arranging portion (60) with an instruction concentration (C1); and
a judging portion (15) which judges whether or not a detection sensitivity of the flammable gas sensor (58) is deteriorated based on an output value (V1) of the flammable gas sensor (58) relative to the instruction concentration (C1).

2. The fuel cell system according to claim 1, further comprising a reforming portion (33) which generates the fuel by a reforming material and a reforming water and supplies the fuel cell with the fuel, wherein the instructing portion (15) makes a concentration of the flammable gas in the sensor arranging portion (60) to be the instruction concentration (C1) based on a control in which the reforming material with a concentration of a predetermined instruction value is sent towards the fuel cell (34), under a non-ignition state of the combustion portion (36).

3. The fuel cell system according to claim 2, further comprising a fuel supplying portion (11a1) which supplies the reforming portion (33) with the reforming material, wherein the fuel supplying portion (11a1) includes a fuel pump (11a1) for supplying the reforming material, wherein the concentration of the flammable gas in the sensor arranging portion (60) is set to be the instruction concentration (C1) based on a control of the fuel pump (11a1).

4. The fuel cell system according to claim 3, further comprising:
a cathode air supplying portion (11c1) which supplies the cathode (34q) with the oxidant gas as a cathode air, wherein the cathode air supplying portion (11c1) includes a cathode air blower (11c1) and the concentration of the flammable gas in the sensor arranging portion (60) is set to be the instruction concentration (C1), based on the control of the fuel pump (11a1) and a control of the cathode air blower (11c1).

5. The fuel cell system according to claim 4, wherein
the cathode air blower (11c1) is provided in the housing (10a) and a ventilation fan (55) is provided for discharging the ventilated air from the ventilation discharge port (10d) outside the housing (10a) and wherein
the concentration of the flammable gas in the sensor arranging portion (60) is set to be the instruction concentration (C1) based on the control of the fuel pump (11a1) and the control of the cathode air blower (11c1) and a control of the ventilation fan (55).

6. The fuel cell system according to any one of claims 2 through 5, wherein the judging portion (15) periodically performs a judgment.

7. The fuel cell system according to claim 1, wherein the instructing portion (15) includes an oxygen ratio changing portion (15) which makes the concentration of the flammable gas in the sensor arranging portion (60) to be the instruction concentration (C1) by changing the oxygen ratio (λ) obtained by dividing a flow rate of the oxygen included in the cathode off gas introduced into the combustion portion (36) by an ideal flow rate of the oxygen necessary for performing a complete combustion of the flammable gas included in the anode off gas introduced into the combustion portion (36) to a judging oxygen ratio (λa) under an ignition state of the combustion portion (36).

8. The fuel cell system according to claim 7, wherein the oxygen ratio changing portion (15) makes the judging oxygen ratio (λa) to be changed more than an incomplete combustion starting oxygen ratio (λ0) by which an incomplete combustion of the flammable gas included in the anode off gas in the combustion portion (36) occurs.

9. The fuel cell system according to claim 8, further comprising a reforming portion (33) which generates the fuel by a reforming material and a reforming water and supplies the fuel cell (34) with the fuel and a fuel supplying portion (11a1) which supplies the reforming portion (33) with the reforming material, wherein the oxygen ratio changing portion (15) makes the oxygen ratio (λ) to be changed to the judging oxygen ratio (λa) by further changing the flow rate of the reforming material which is supplied by the fuel supplying portion (11a1) compared to a change before the oxygen ratio (λ) is changed to the judging oxygen ratio (λa).

10. The fuel cell system according to claim 8, further comprising:
a sweeping current changing portion (13) which changes a sweeping current to be swept from the fuel cell; and
a cathode air supplying portion (11c1) which supplies the cathode (34q) with the oxidant gas as a cathode air, wherein
the oxygen ratio changing portion (15) controls the sweeping current changing portion (13) so that the sweeping current is further changed compared to a change before the oxygen ratio (λ) is changed to the judging oxygen ratio (λa) and at the same time the oxygen ratio changing portion (15) controls the cathode air supplying portion (11c1) so that the flow rate of the cathode air is changed by the flow rate of the cathode air which corresponds to the change of the sweeping current, wherein the oxygen ratio (λ) is changed to the judging oxygen ratio (λa).

11. The fuel cell system according to claim 9, further comprising:
an instruction material flow rate calculating portion (15) which calculates an instruction material flow rate (Fa) which corresponds to a flow rate of the reforming material by which the oxygen ratio (λ) is changed to the judging oxygen ratio (λa), based on the sweeping current to be swept from the fuel cell (34) and the flow rate of the cathode air supplied to the cathode (34q) as the oxidant gas, wherein
the oxygen ratio changing portion (15) controls the fuel supplying portion (11a1) so that the flow rate of the reforming material becomes the instruction material flow rate (Fa).

12. The fuel cell system according to claim 10, further comprising:
an instruction current calculating portion (15) which calculates an instruction current (Ia) which corresponds to a current swept from the fuel cell (34), by which the oxygen ratio (λ) is changed to the judging oxygen ratio (λa), based on the flow rate of the reforming material which is supplied from the fuel supplying portion (11a1); and
an instruction cathode air flow rate calculating portion (15) which calculates an instruction cathode air flow rate (Fb) which corresponds to a flow rate of the cathode air by which the oxygen ratio (λ) is changed to the judging oxygen ratio (λa), based on the flow rate of the reforming material which is supplied from the fuel supplying portion (11a1) and the instruction current (Ia) calculated by the instruction current calculating portion (15), wherein
the oxygen ratio changing portion (15) controls the sweeping current changing portion (13) so that the sweeping current swept from the fuel cell (34) becomes the instruction current (Ia) and at the same time controls the cathode air supplying portion (11c1) so that flow rate of the cathode air becomes the instruction cathode air flow rate (Fb).

13. The fuel cell system according to claim 11, further comprising:
a reforming portion temperature detecting portion (33a) which detects a temperature (T1) of the reforming portion (33), wherein
the instruction material flow rate calculating portion (15) calculates the instruction material flow rate (Fa) based on the temperature (T1) of the reforming portion (33) detected by the reforming portion temperature detecting portion (33a).

14. The fuel cell system according to claim 12, further comprising:
a reforming portion temperature detecting portion (33a) which detects a temperature (T1) of the reforming portion (33), wherein
the instruction current calculating portion (15) calculates the instruction current (Ia) based on the temperature (T1) of the reforming portion (33) detected by the reforming portion temperature detecting portion (33a).

15. The fuel cell system according to claim 1, wherein the instructing portion (15) makes the concentration of the flammable gas in the sensor arranging portion (60) to be the instruction concentration (C1) by changing the output to the fuel cell (34), under an electricity generating state.

## Patentansprüche

1. Brennstoffzellensystem, mit:
einer Brennstoffzelle (34), die Strom durch einen einer Anode (34p) zugeführten Brennstoff und ein einer Katode (34q) zugeführtes Oxidansgas erzeugt;
einem Verbrennungsabschnitt (36), ein Anodenabgas aus der Brennstoffzelle (34) und ein Katodenabgas aus der Brennstoffzelle (34) verheizt, um ein Verbrennungsgas zu erzeugen;
einer Umhüllung (31), die durch ein wärmeisolierendes Material ausgebildet ist und in sich die Brennstoffzelle (34) und den Verbrennungsabschnitt (36) aufnimmt;
einem Gehäuse (10a), das die Umhüllung (31) in sich aufnimmt und mit einer Lüftungsablassöffnung (10b) versehen ist, die die Luft aus dem Gehäuse (10a) ablässt, die innerhalb des Gehäuses (10a) belüftet wird;
einem Ablassdurchlass (50), der mit der Umhüllung (31) verbunden ist und das Verbrennungsgas aus dem Gehäuse (10a) ablässt, das aus der Umhüllung (31) strömt;
einem Sensor (58) für entzündliches Gas, der an einem Sensoranordnungsabschnitt (60) vorgesehen ist, der in dem Ablassdurchlass an einer stromabwärtigen Seite eines Verbindungspunkts (57) der belüfteten Luft und des Verbrennungsgases zum Erfassen einer Konzentration des entzündlichen Gases angeordnet ist;
einem Anweisungsabschnitt (15), der das entzündliche Gas anweist, durch den Sensoranordnungsabschnitt (60) mit einer Anweisungskonzentration (C1) zu strömen; und
einem Beurteilungsabschnitt (15), der beurteilt, ob eine Erfassungsempfindlichkeit des Sensors (58) für entzündliches Gas verschlechtert ist oder nicht, basierend auf einem Ausgabewert (V1) des Sensors (58) für entzündliches Gas im Verhältnis zu der Anweisungskonzentration (C1).

2. Brennstoffzellensystem nach Anspruch 1, ferner mit einem Reformerabschnitt (33), der den Brennstoff mit einem Reformermaterial und einem Reformerwasser erzeugt und die Brennstoffzelle mit dem Brennstoff versorgt, wobei der Anweisungsabschnitt (15) eine Konzentration des entzündlichen Gases in dem Sensoranordnungsabschnitt (60) zu der Anweisungskonzentration (C1) macht, basierend auf einer Steuerung, bei der das Reformermaterial mit einer Konzentration eines vorbestimmten Anweisungswerts in Richtung der Brennstoffzelle (34) bei einem Nichtzündungszustand des Verbrennungsabschnitts (36) gesendet wird.

3. Brennstoffzellensystem nach Anspruch 2, ferner mit einem Brennstoffzuführabschnitt (11a1), der den Reformerabschnitt (33) mit dem Reformermaterial versorgt, wobei der Brennstoffzuführabschnitt (11a1) eine Brennstoffpumpe (11a1) zum Zuführen des Reformermaterials umfasst, wobei die Konzentration des entzündlichen Gases in dem Sensoranordnungsabschnitt (60) festgelegt ist, um die Anweisungskonzentration (C1) zu sein, basierend auf einer Steuerung der Brennstoffpumpe (11a1).

4. Brennstoffzellensystem nach Anspruch 3, ferner mit:
einem Katodenluftzuführabschnitt (11c1), der die Katode (34q) mit dem Oxidansgas als einer Katodenluft versorgt, wobei der Katodenluftzuführabschnitt (11c1) ein Katodenluftgebläse (11c1) umfasst und die Konzentration des entzündlichen Gases in dem Sensoranordnungsabschnitt (60) festgelegt ist, um die Anweisungskonzentration (C1) zu sein, basierend auf der Steuerung der Brennstoffpumpe (11a1) und einer Steuerung des Katodenluftgebläses (11c1).

5. Brennstoffzellensystem nach Anspruch 4, wobei
das Katodenluftgebläse (11c1) in dem Gehäuse (10a) vorgesehen ist, und ein Belüftungslüfter (55) zum Ablassen der belüfteten Luft aus der Lüftungsablassöffnung (10d) außerhalb des Gehäuses (10a) vorgesehen ist, und wobei
die Konzentration des entzündlichen Gases in dem Sensoranordnungsabschnitt (60) festgelegt ist, um die Anweisungskonzentration (C1) zu sein, basierend auf der Steuerung der Brennstoffpumpe (11a1) und der Steuerung des Katodenluftgebläses (11c1), und einer Steuerung des Belüftungslüfters (55).

6. Brennstoffzellensystem nach einem der Ansprüche 2 bis 5, wobei der Beurteilungsabschnitt (15) eine Beurteilung periodisch durchführt.

7. Brennstoffzellensystem nach Anspruch 1, wobei der Anweisungsabschnitt (15) einen Sauerstoffverhältnisänderungsabschnitt (15) umfasst, die Konzentration des entzündlichen Gases in dem Sensoranordnungsabschnitt (60) zu der Anweisungskonzentration (C1) macht, indem er das Sauerstoffverhältnis (λ), das durch Teilen einer Strömungsrate des Sauerstoffs, der in dem Katodenabgas enthalten ist, das in den Verbrennungsabschnitt (36) eingeführt wird, durch eine optimale Strömungsrate des Sauerstoffs, die zum Durchführen einer vollständigen Verbrennung des entzündlichen Gases erforderlich ist, das in dem Anodenabgas enthalten ist, das in den Verbrennungsabschnitt (36) eingeführt wird, erlangt wird, zu einem Beurteilungssauerstoffverhältnis (λa) bei einem Verbrennungszustand des Verbrennungsabschnitts (36) ändert.

8. Brennstoffzellensystem nach Anspruch 7, wobei der Sauerstoffverhältnisänderungsabschnitt (15) das Beurteilungssauerstoffverhältnis (λa) mehr ändert als ein Sauerstoffverhältnis (λ0) eines Beginns einer unvollständigen Verbrennung, bei der eine unvollständige Verbrennung des entzündlichen Gases, das in dem Anodenabgas enthalten ist, in dem Verbrennungsabschnitt (36) auftritt.

9. Brennstoffzellensystem nach Anspruch 8, ferner mit einem Reformerabschnitt (33), der den Brennstoff mit einem Reformermaterial und einem Reformerwasser erzeugt und die Brennstoffzelle (34) mit dem Brennstoff versorgt, und einem Brennstoffzuführabschnitt (11a1), der den Reformerabschnitt (33) mit dem Reformermaterial versorgt, wobei der Sauerstoffverhältnisänderungsabschnitt (15) das Sauerstoffverhältnis (λ) zu dem Beurteilungssauerstoffverhältnis (λa) ändert, indem er die Strömungsrate des Reformermaterials weiter ändert, das durch den Brennstoffzuführabschnitt (11a1) zugeführt wird, verglichen mit einer Änderung bevor das Sauerstoffverhältnis (λ) zu dem Beurteilungssauerstoffverhältnis (λa) geändert wird.

10. Brennstoffzellensystem nach Anspruch 8, ferner mit:
einem Kippstromänderungsabschnitt (13), der einen Kippstrom ändert, um von der Brennstoffzelle gekippt zu werden; und
einem Katodenluftzuführabschnitt (11c1), der die Katode (34q) mit dem Oxidansgas als einer Katodenluft versorgt, wobei
der Sauerstoffverhältnisänderungsabschnitt (15) den Kippstromänderungsabschnitt (13) steuert, sodass der Kippstrom weiter geändert wird, verglichen mit einer Änderung, bevor das Sauerstoffverhältnis (λ) zu dem Beurteilungssauerstoffverhältnis (λa) geändert wird, und gleichzeitig steuert der Sauerstoffverhältnisänderungsabschnitt (15) den Katodenluftzuführabschnitt (11c1), sodass die Strömungsrate der Katodenluft durch die Strömungsrate der Katodenluft geändert wird, die der Änderung des Kippstroms entspricht, wobei das Sauerstoffverhältnis (λ) zu dem Beurteilungssauerstoffverhältnis (λa) geändert wird.

11. Brennstoffzellensystem nach Anspruch 9, ferner mit:
einem Anweisungsmaterialströmungsratenberechnungsabschnitt (15), der eine Anweisungsmaterialströmungsrate (Fa) berechnet, die einer Strömungsrate des Reformermaterials entspricht, durch die das Sauerstoffverhältnis (λ) zu dem Beurteilungssauerstoffverhältnis (λa) geändert wird, basierend auf dem Kippstrom, der durch die Brennstoffzelle (34) gekippt wird, und der Strömungsrate der Katodenluft, die als das Oxidansgas der Katode (34q) zugeführt wird, wobei
der Sauerstoffverhältnisänderungsabschnitt (15) den Brennstoffzuführabschnitt (11a1) so steuert, dass die Strömungsrate des Reformermaterials die Anweisungsmaterialströmungsrate (Fa) wird.

12. Brennstoffzellensystem nach Anspruch 10, ferner mit:
einem Anweisungsstromberechnungsabschnitt (15), der einen Anweisungsstrom (Ia) berechnet, der einem Strom entspricht, der von der Brennstoffzelle (34) gekippt wird, durch den das Sauerstoffverhältnis (λ) zu dem Beurteilungssauerstoffverhältnis (λa) geändert wird, basierend auf der Strömungsrate des Reformermaterials, das von dem Brennstoffzuführabschnitt (11a1) zugeführt wird; und
einem Anweisungskatodenluftströmungsratenberechnungsabschnitt (15), der eine Anweisungskatodenluftströmungsrate (Fb) berechnet, die einer Strömungsrate der Katodenluft entspricht, durch die das Sauerstoffverhältnis (λ) zu dem Beurteilungssauerstoffverhältnis (λa) geändert wird, basierend auf der Strömungsrate des Reformermaterials, das von dem Brennstoffzuführabschnitt (11a1) zugeführt wird, und dem Anweisungsstrom (Ia), der durch den Anweisungsstromberechnungsabschnitt (15) berechnet wird, wobei
der Sauerstoffverhältnisänderungsabschnitt (15) den Kippstromänderungsabschnitt (13) so steuert, dass der von der Brennstoffzelle (34) gekippte Kippstrom der Anweisungsstrom (Ia) wird, und gleichzeitig den Katodenluftzuführabschnitt (11c1) so steuert, dass die Strömungsrate der Katodenluft die Anweisungskatodenluftströmungsrate (Fb) wird.

13. Brennstoffzellensystem nach Anspruch 11, ferner mit:
einem Reformerabschnitttemperaturerfassungsabschnitt (33a), der eine Temperatur (T1) des Reformerabschnitts (33) erfasst, wobei
der Anweisungsmaterialströmungsratenberechnungsabschnitt (15) die Anweisungsmaterialströmungsrate (Fa) basierend auf der Temperatur (T1) des Reformerabschnitts (33) berechnet, die durch den Reformerabschnitttemperaturerfassungsabschnitt (33a) erfasst wird.

14. Brennstoffzellensystem nach Anspruch 12, ferner mit:
einem Reformerabschnitttemperaturerfassungsabschnitt (33a), der eine Temperatur (T1) des Reformerabschnitts (33) erfasst, wobei
der Anweisungsstromberechnungsabschnitt (15) den Anweisungsstrom (Ia) basierend auf der Temperatur (T1) des Reformerabschnitts (33) berechnet, der durch den Reformerabschnitttemperaturerfassungsabschnitt (33a) erfasst wird.

15. Brennstoffzellensystem nach Anspruch 1, wobei der Anweisungsabschnitt (15) die Konzentration des entzündlichen Gases in dem Sensoranordnungsabschnitt (60) zu der Anweisungskonzentration (C1) macht, indem er die Ausgabe der Brennstoffzelle (34) bei einem Stromerzeugungszustand ändert.

## Revendications

1. Système de pile à combustible qui comprend :
une pile à combustible (34) qui génère de l'électricité par le combustible fourni à une anode (34p) et un gaz oxydant fourni à une cathode (34q) ;
une partie de combustion (36) qui brûle un gaz de dégagement d'anode de la pile à combustible (34) et un gaz de dégagement de cathode de la pile à combustible (34) pour générer un gaz d'échappement de combustion ;
un boîtier (31) formé par un matériau thermiquement isolant et qui loge dans celui-ci la pile à combustible (34) et la partie de combustion (36) ;
un logement (10a) qui loge le boîtier (31) dans celui-ci et pourvu d'un orifice de décharge de ventilation (10d) qui décharge l'air ventilé à l'intérieur du logement (10a) hors du logement (10a) ;
un passage de décharge (50) relié au boîtier (31) et qui décharge le gaz d'échappement de combustion qui s'écoule du boîtier (31) hors du logement (10a) ;
un capteur de gaz inflammable (58) prévu au niveau d'une partie d'agencement de capteur (60) positionnée dans le passage de décharge en aval d'un point de fusion (57) de l'air ventilé et du gaz d'échappement de combustion pour détecter une concentration du gaz inflammable ;
une partie d'instruction (15) qui ordonne que le gaz inflammable s'écoule à travers la partie d'agencement de capteur (60) avec une concentration d'instruction (C1) ; et
une partie de jugement (15) qui juge si, oui ou non, une sensibilité de détection du capteur de gaz inflammable (58) est détériorée sur la base d'une valeur de sortie (V1) du capteur de gaz inflammable (58) par rapport à la concentration d'instruction (C1).

2. Système de pile à combustible selon la revendication 1, qui comprend en outre une partie de reformage (33) qui génère le combustible par un matériau de reformage et une eau de reformage et fournit le combustible à la pile à combustible, dans lequel la partie d'instruction (15) fait en sorte qu'une concentration du gaz inflammable dans la partie d'agencement de capteur (60) soit la concentration d'instruction (C1) sur la base d'une commande dans laquelle le matériau de reformage avec une concentration d'une valeur d'instruction prédéterminée est envoyé vers la pile à combustible (34), dans un état non d'allumage de la partie de combustion (36).

3. Système de pile à combustible selon la revendication 2, qui comprend en outre une partie de fourniture de combustible (11a1) qui fournit le matériau de reformage à la partie de reformage (33), dans lequel la partie de fourniture de combustible (11a1) comprend une pompe à combustible (11a1) pour fournir le matériau de reformage, dans lequel la concentration du gaz inflammable dans la partie d'agencement de capteur (60) est établie pour être la concentration d'instruction (C1) sur la base d'une commande de la pompe à combustible (11a1).

4. Système de pile à combustible selon la revendication 3, qui comprend en outre :
une partie de fourniture d'air de cathode (11c1) qui fournit le gaz oxydant en tant qu'air de cathode à la cathode (34q), dans lequel la partie de fourniture d'air de cathode (11c1) comprend une soufflante d'air de cathode (11c1) et la concentration du gaz inflammable dans la partie d'agencement de capteur (60) est établie pour être la concentration d'instruction (C1), sur la base de la commande de la pompe à combustible (11a1) et d'une commande de la soufflante d'air de cathode (11c1).

5. Système de pile à combustible selon la revendication 4, dans lequel
la soufflante d'air de cathode (11c1) est prévue dans le logement (10a) et un ventilateur de ventilation (55) est prévu pour décharger l'air ventilé à partir de l'orifice de décharge de ventilation (10d) à l'extérieur du logement (10a), et dans lequel
la concentration du gaz inflammable dans la partie d'agencement de capteur (60) est établie pour être la concentration d'instruction (C1) sur la base de la commande de la pompe à combustible (11a1) et de la commande de la soufflante d'air de cathode (11c1) et d'une commande du ventilateur de ventilation (55).

6. Système de pile à combustible selon l'une quelconque des revendications 2 à 5, dans lequel la partie de jugement (15) effectue périodiquement un jugement.

7. Système de pile à combustible selon la revendication 1, dans lequel la partie d'instruction (15) comprend une partie de changement de proportion d'oxygène (15) qui fait en sorte que la concentration du gaz inflammable dans la partie d'agencement de capteur (60) soit la concentration d'instruction (C1) en changeant la proportion d'oxygène (λ) obtenue en divisant un débit de l'oxygène inclus dans le gaz de dégagement de cathode introduit dans la partie de combustion (36) par un débit idéal de l'oxygène nécessaire pour effectuer une combustion complète du gaz inflammable inclus dans le gaz de dégagement d'anode introduit dans la partie de combustion (36) en une proportion d'oxygène de jugement (λa) dans un état d'allumage de la partie de combustion (36).

8. Système de pile à combustible selon la revendication 7, dans lequel la partie de changement de proportion d'oxygène (15) fait en sorte que la proportion d'oxygène de jugement (λa) soit changée à une valeur supérieure à une proportion d'oxygène de début de combustion incomplète (λ0) par laquelle une combustion incomplète du gaz inflammable inclus dans le gaz de dégagement d'anode dans la partie de combustion (36) se produit.

9. Système de pile à combustible selon la revendication 8, qui comprend en outre une partie de reformage (33) qui génère le combustible par un matériau de reformage et une eau de reformage et fournit le combustible à la pile à combustible (34) et une partie de fourniture de combustible (11a1) qui fournit le matériau de reformage à la partie de reformage (33), dans lequel la partie de changement de proportion d'oxygène (15) fait en sorte que la proportion d'oxygène (λ) soit changée en la proportion d'oxygène de jugement (λa) en changeant davantage le débit du matériau de reformage qui est fourni par la partie de fourniture de combustible (11a1) comparé à un changement avant que la proportion d'oxygène (λ) soit changée en la proportion d'oxygène de jugement (λa).

10. Système de pile à combustible selon la revendication 8, qui comprend en outre :
une partie de changement de courant de balayage (13) qui change un courant de balayage à balayer à partir de la pile à combustible ; et
une partie de fourniture d'air de cathode (11c1) qui fournit le gaz oxydant en tant qu'air de cathode à la cathode (34q), dans lequel
la partie de changement de proportion d'oxygène (15) commande la partie de changement de courant de balayage (13) de sorte que le courant de balayage soit davantage changé comparé à un changement avant que la proportion d'oxygène (λ) soit changée en la proportion d'oxygène de jugement (λa) et en même temps la partie de changement de proportion d'oxygène (15) commande la partie de fourniture d'air de cathode (11c1) de sorte que le débit de l'air de cathode soit changé du débit de l'air de cathode qui correspond au changement du courant de balayage, dans lequel la proportion d'oxygène (λ) est changée en la proportion d'oxygène de jugement (λa).

11. Système de pile à combustible selon la revendication 9, qui comprend en outre :
une partie de calcul de débit de matériau d'instruction (15) qui calcule un débit de matériau d'instruction (Fa) qui correspond à un débit du matériau de reformage par lequel la proportion d'oxygène (λ) est changée en la proportion d'oxygène de jugement (λa), sur la base du courant de balayage à balayer à partir de la pile à combustible (34) et du débit de l'air de cathode fourni à la cathode (34q) en tant que gaz oxydant, dans lequel
la partie de changement de proportion d'oxygène (15) commande la partie de fourniture de combustible (11a1) de sorte que le débit du matériau de reformage devienne le débit de matériau d'instruction (Fa).

12. Système de pile à combustible selon la revendication 10, qui comprend en outre :
une partie de calcul de courant d'instruction (15) qui calcule un courant d'instruction (Ia) qui correspond à un courant balayé à partir de la pile à combustible (34), par lequel la proportion d'oxygène (λ) est changée en la proportion d'oxygène de jugement (λa), sur la base du débit du matériau de reformage qui est fourni à partir de la partie de fourniture de combustible (11a1) ; et
une partie de calcul de débit d'air de cathode d'instruction (15) qui calcule un débit d'air de cathode d'instruction (Fb) qui correspond à un débit de l'air de cathode par lequel la proportion d'oxygène (λ) est changée en la proportion d'oxygène de jugement (λa), sur la base du débit du matériau de reformage qui est fourni à partir de la partie de fourniture de combustible (11a1) et du courant d'instruction (Ia) calculé par la partie de calcul de courant d'instruction (15), dans lequel
la partie de changement de proportion d'oxygène (15) commande la partie de changement de courant de balayage (13) de sorte que le courant de balayage balayé à partir de la pile à combustible (34) devienne le courant d'instruction (Ia) et en même temps commande la partie de fourniture d'air de cathode (11c1) de sorte que le débit de l'air de cathode devienne le débit d'air de cathode d'instruction (Fb).

13. Système de pile à combustible selon la revendication 11, qui comprend en outre :
une partie de détection de température de partie de reformage (33a) qui détecte une température (T1) de la partie de reformage (33), dans lequel
la partie de calcul de débit de matériau d'instruction (15) calcule le débit de matériau d'instruction (Fa) sur la base de la température (T1) de la partie de reformage (33) détectée par la partie de détection de température de partie de reformage (33a).

14. Système de pile à combustible selon la revendication 12, qui comprend en outre :
une partie de détection de température de partie de reformage (33a) qui détecte une température (T1) de la partie de reformage (33), dans lequel
la partie de calcul de courant d'instruction (15) calcule le courant d'instruction (Ia) sur la base de la température (T1) de la partie de reformage (33) détectée par la partie de détection de température de partie de reformage (33a).

15. Système de pile à combustible selon la revendication 1, dans lequel la partie d'instruction (15) fait en sorte que la concentration du gaz inflammable dans la partie d'agencement de capteur (60) soit la concentration d'instruction (C1) en changeant la sortie vers la pile à combustible (34), dans un état de génération d'électricité.
